# EUROPEAN PATENT SPECIFICATION

(11) **EP 2 328 084 B1**
(45) Date of publication and mention of the grant of the patent: **22.06.2016**
(21) Application number: 10192421.5
(22) Date of filing: 24.11.2010
(51) Int. Cl.: G06F 9/445

(54) **Equipment management system, equipment managing apparatus, electronic equipment, software updating method, and computer-readable storage medium**
Geräteverwaltungssystem, Geräteverwaltungsvorrichtung, elektronisches Gerät, Softwareaktualisierungsverfahren und computerlesbares Speichermedium
Système de gestion d'équipement, appareil de gestion d'équipement, équipement électrique, procédé de mise à jour de logiciel et support de stockage lisible sur ordinateur

(30) Priority: 27.11.2009 JP 2009270490
(43) Date of publication of application: 01.06.2011
(73) Proprietor: Ricoh Company Ltd., Tokyo 143-8555 (JP)
(72) Inventor: Tanaka, Hisashi, Tokyo 143-8555 (JP)
(74) Representative: Schwabe - Sandmair - Marx

(56) References cited:
- EP-A1- 1 542 125
- EP-A2- 2 083 356
- US-A1- 2004 243 994
- US-A1- 2006 061 789
- US-A1- 2008 189 693
- US-A1- 2009 070 756
- US-A1- 2009 240 932

## Description

### BACKGROUND OF THE INVENTION

### 1. Field of the Invention

The present invention generally relates to equipment management systems, equipment managing apparatuses, electronic equipments, software updating methods, and computer-readable storage media. The equipment management system may manage one or a plurality of electronic equipments that are connected thereto via a data channel, such as a network, and perform a batch update with respect to plural application software that run on the electronic equipment.

### 2. Description of the Related Art

In a known equipment management system, an equipment managing apparatus (or equipment managing server) may monitor states of image processing apparatuses (hereinafter also referred to as "electronic equipments"), such as MFPs (Multi-Function Peripherals) and printers, that are connected via a predetermined data channel, which may be a network. In this equipment management system, a user may detect (or know) an abnormality in each electronic equipment without having to actually move to a set-up location of each electronic equipment.

In the above equipment management system, it is important for the equipment managing apparatus to manage a software environment of each electronic equipment, and to maintain the application software that runs on each electronic equipment to a most updated (or recent) state. On the other hand, the user environment to which the equipment management system is applied may require a number of electronic equipments, on the order of several thousand, to be managed. In such a situation, a software managing operation to be performed by the user is a troublesome operation.

A Japanese Laid-Open Patent Publication No.2008-186392 proposes an automatic software updating apparatus capable of performing a software install operation according to changes in the number of electronic equipments connected to the network.

However, the conventional software updating method does not take into consideration the software update procedure and the configuration which may differ for each application software.

Recently, the operating environment of the electronic equipments such as the image processing apparatuses has become flexible. For this reason, the application software that runs on the electronic equipment may be developed by various software vendors. In addition, because the functions of the electronic equipments such as the image processing apparatuses have diversified, the application software may be developed by different sections or departments even within the same equipment manufacturer. The software update procedure and the configuration may differ for each application software due to the different vendors or developing environments. Accordingly, the user must cope with each individual application software because the software update procedure and the configuration may differ for each application software, and the user must perform an updating operation that takes into consideration each application software that functions in the electronic equipment. In such a situation, the software update operation to be performed by the user is a troublesome operation.

Therefore, in the conventional equipment management system, the user or operator must be aware of the software update procedure and the configuration that may differ for each application software, in order to perform the software update operation.

EP 2 083 356 A1 discloses a distribution server which distributes firmware versions to an image forming apparatus.

US 2004/0243994 A1 discloses a software update device capable of communicating with a target update device via a network.

EP 1 542 125 A1 discloses an image processing apparatus having an updating data reception part for receiving updating data related to a program.

US 2009/070756 A1 discloses an electronic network comprising a server and image processing apparatuses which are updated with software updates by the server.

US 2009/0240932 A1 discloses an image forming device having a firmware update control part.

### SUMMARY OF THE INVENTION

Accordingly, it is a general object in one embodiment of the present invention to provide a novel and useful equipment management system, equipment managing apparatus, electronic equipment, software updating method, and computer-readable storage medium, in which the problem described above may be suppressed.

Another and more specific object in one embodiment of the present invention is to provide a equipment management system, an equipment managing apparatus, an electronic equipment, a software updating method, and a computer-readable storage medium, that may perform a batch update with respect to plural application software that run on the electronic equipment, without requiring the user to be aware of the software update procedure and the configuration that may differ for each application software, when performing the software update operation.

According to one aspect of the present invention, there is provided an equipment management system comprising an equipment managing apparatus; at least one electronic equipment to be managed; and a data channel coupling the at least one electronic equipment and the equipment managing apparatus, the equipment managing apparatus comprising a holding part configured to hold updating data in a predetermined storage region, the updating data including definition data in which software information of software application that functions in the electronic equipment is defined, and module data of the application software; a first judging part configured to judge whether the holding part holds the updating data; and a sending part configured to send the updating data to the electronic equipment, the electronic equipment comprising a receiving part configured to receive the updating data sent from the equipment managing apparatus; a second judging part configured to judge whether a software update of the application software is executable in the electronic equipment; and a request part configured to request the software update with respect to the application software, wherein the sending part of the equipment managing apparatus sends the updating data to the electronic equipment based on a judgement result of the first judging part; and the request part of the electronic equipment sends the module data included in the updating data received by the receiving part to the application software based on a judgement result of the second judging part.

According to one aspect of the present invention, there is provided an equipment management apparatus coupled to at least one electronic equipment via a predetermined data channel, comprising a holding part configured to hold in a predetermined storage region thereof updating data including definition data in which software information of software application that functions in the electronic equipment is defined, and module data of the application software; a judging part configured to judge whether the holding part holds the updating data; and a sending part configured to send the updating data to the electronic equipment, wherein the sending part sends the updating data to the electronic equipment based on a judgement result of the judging part.

According to one aspect of the present invention, there is provided an electronic equipment communicatable with an equipment managing apparatus via a data channel, comprising a receiving part configured to receive updating data from an equipment managing apparatus, the updating data including definition data in which software information of software application that functions in the electronic equipment is defined, and module data of the application software; a judging part configured to judge whether a software update of application software that runs on the electronic equipment is executable in the electronic equipment; and a request part configured to request the software update with respect to the application software, wherein the request part sends the module data included in the updating data received by the receiving part to the application software based on a judgement result of the judging part.

According to one aspect of the present invention, there is provided a software updating method for an equipment management system in which at least one electronic equipment is coupled via a predetermined data channel to an equipment managing apparatus that holds in a predetermined storage region thereof updating data including definition data in which software information of software application that functions in the electronic equipment is defined, and module data of the application software, the method comprising a first judging procedure executed by the equipment managing apparatus judging whether the equipment managing apparatus holds the updating data; and a sending procedure executed by the equipment managing apparatus sending the updating data to the electronic equipment, a receiving procedure executed by the electronic equipment receiving the updating data sent from the equipment managing apparatus; a second judging procedure executed by the electronic equipment judging whether a software update of the application software is executable in the electronic equipment; and a request procedure executed by the electronic equipment requesting the software update with respect to the application software, wherein the sending procedure of the equipment managing apparatus sends the updating data to the electronic equipment based on a judgement result of the first judging part; and the request procedure of the electronic equipment sends the module data included in the updating data received by the receiving part to the application software based on a judgement result of the second judging procedure.

According to one aspect of the present invention, there is provided a computer-readable storage medium that stores a program which, when executed by a computer of an equipment managing apparatus, causes the computer to perform a process comprising a holding procedure to hold in a predetermined storage region thereof updating data including definition data in which software information of software application that functions in the electronic equipment is defined, and module data of the application software; a judging procedure to judge whether the holding procedure holds the updating data; and a sending procedure to send the updating data to the electronic equipment, wherein the sending procedure sends the updating data to the electronic equipment based on a judgement result of the judging procedure.

According to one aspect of the present invention, there is provided a computer-readable storage medium that stores a program which, when executed by a computer of an electronic equipment, causes the computer to perform a process comprising a receiving procedure to receive updating data from an equipment managing apparatus, the updating data including definition data in which software information of software application that functions in the electronic equipment is defined, and module data of the application software; a judging procedure to judge whether a software update of application software that runs on the electronic

equipment is executable in the electronic equipment; and a request procedure to request the software update with respect to the application software, wherein the request procedure sends the module data included in the updating data received by the receiving procedure to the application software based on a judgement result of the judging procedure.

Other objects and further features of the present invention will be apparent from the following detailed description when read in conjunction with the accompanying drawings.

### BRIEF DESCRIPTION OF THE DRAWINGS

FIG. 1 is a diagram illustrating an example of a structure of an equipment management system in a first embodiment of the present invention;
FIG. 2 is a block diagram illustrating an example of a hardware structure of an equipment managing apparatus in the first embodiment of the present invention;
FIG. 3 is a block diagram illustrating an example of a hardware structure of an electronic equipment in the first embodiment of the present invention;
FIG. 4 is a diagram illustrating an example of a functional structure of the equipment management system in the first embodiment of the present invention;
FIGS. 5A and 5B are diagrams for explaining an example of updating data in the first embodiment of the present invention;
FIGS. 6A and 6B are diagrams for explaining another example of the updating data in the first embodiment of the present invention;
FIG. 7 is a sequence diagram for explaining an example of a software update procedure of an equipment management in the first embodiment of the present invention;
FIG. 8 is a sequence diagram for explaining another example of the software update procedure of the equipment management in the first embodiment of the present invention;
FIG. 9 is a diagram illustrating an example of the structure of the equipment management system in a second embodiment of the present invention;
FIG. 10 is a diagram illustrating an example of a functional structure of the equipment management system in the second embodiment of the present invention;
FIG. 11 is a sequence diagram for explaining an example of the software update procedure of the equipment management in the second embodiment of the present invention; and
FIG. 12 is a sequence diagram for explaining another example of the software update procedure of the equipment management in the second embodiment of the present invention.

### DESCRIPTION OF THE PREFERRED EMBODIMENTS

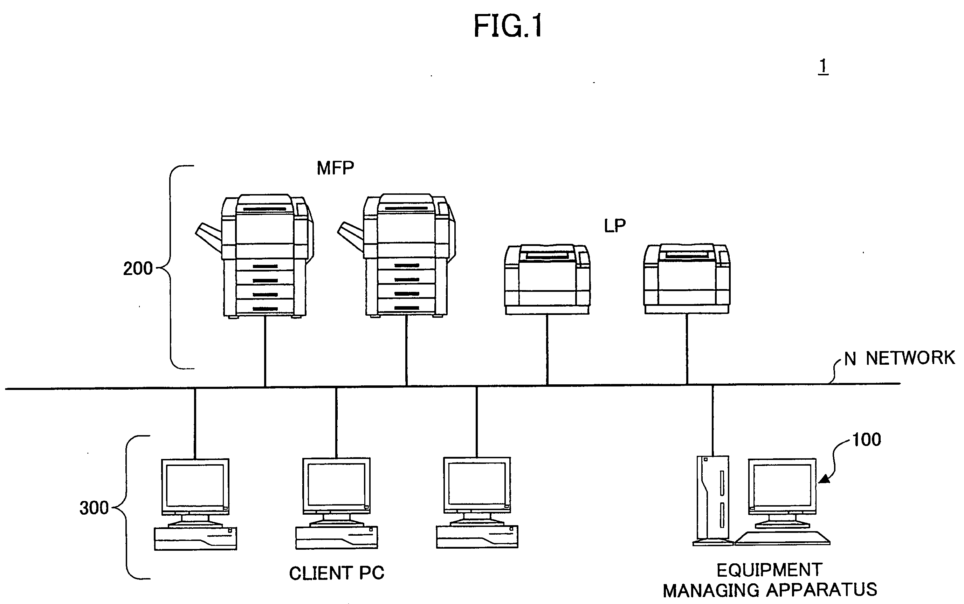

A description will be given of embodiments of an equipment management system, an equipment managing apparatus, an electronic equipment, a software updating method, and a computer-readable storage medium, by referring to FIGS. 1 through 12.

### [First Embodiment]

### <System Structure>

First, a description will be given of a structure of an equipment management system including an equipment managing apparatus.

FIG. 1 is a diagram illustrating an example of the structure of the equipment management system in a first embodiment of the present invention. An equipment management system 1 illustrated in FIG. 1 includes one or a plurality of electronic equipments 200 that are management targets, one or a plurality of client PCs (Personal Computers) 300, and an equipment managing apparatus (or equipment managing server) 100 that are connected via a data channel N, such as a network. The network may be formed by a LAN (Local Area Network).

The electronic equipment 200 may be formed by an image processing apparatus, such as a MFP (Multi-Function Peripheral) and a LP (Laser Printer), that may be used for office work, for example. The client PC 300 may be formed by an information processing apparatus that may be used by the user to inspect information of the electronic equipment 200 or cause the electronic equipment 200 to create work data or make a work request. The equipment managing apparatus 100 may be formed by an information processing apparatus that may centrally manage the electronic equipments 200, based on equipment information received from the electronic equipments 200. For example, the equipment information may include "unique information", "state information", or the like of the electronic equipment 200. The central management performed by the equipment managing apparatus 100 includes monitoring, maintenance, and the like of the electronic equipments 200. The maintenance of the electronic equipment 200 may include the software update of this embodiment, that updates the application software that runs on the electronic equipment 200.

The equipment management system 1 having the system structure described above may provide equipment management services (or equipment management functions) with respect to the user. In the following description, the "user" may include an "operator" or a "maintenance person" of the equipment management system 1 or constituent elements thereof.

### <Hardware Structure>

Next, a description will be given of hardware structures of the equipment managing apparatus 100 and the electronic equipment 200 of this embodiment.

### «Equipment Managing Apparatus»

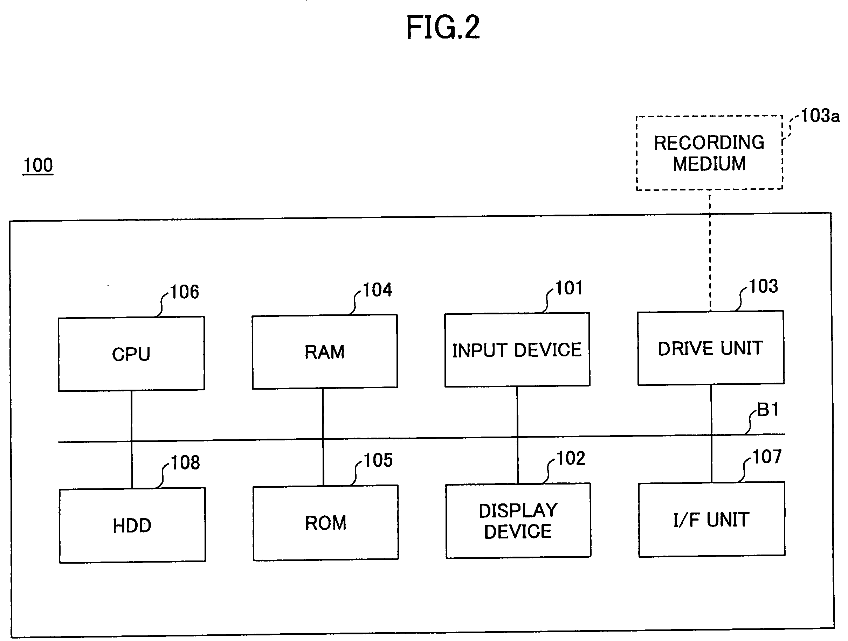

FIG. 2 is a block diagram illustrating an example of the hardware structure of the equipment managing apparatus 100 in the first embodiment of the present invention. As illustrated in FIG. 2, the equipment managing apparatus 100 includes an input device 101, a display device 102, a drive unit 103, a RAM (Random Access Memory) 104, a ROM (Read Only Memory) 105, a CPU (Central Processing Unit) 106, an interface (I/F) unit 107, and a HDD (Hard Disk Drive) 108 that are mutually connected via a bus B1.

The input device 101 may include a keyboard, a mouse, or the like, and may be used to input various operation signals to the equipment managing apparatus 100. The display unit 102 may include a display to display processed results of the equipment managing apparatus 100, such as "collected equipment information" and "software update result information".

The interface unit 107 may be configured to connect the equipment managing apparatus 100 to a predetermined data channel N. Hence, the equipment managing apparatus 100 may perform data communications with the electronic equipment 200 and the client PC 300 via the interface unit 107.

The HDD 108 may be formed by a nonvolatile storage device and store various programs and various data. The various programs and the various data stored in the HDD 108 may include an information processing system that is configured to control the entire equipment managing apparatus 100, and application software that is configured to provide various functions on the information processing system. The information processing system may include basic software or OS (Operating System) such as "WINDOWS (registered trademark)" and "UNIX (registered trademark)". On the other hand, the various functions provided on the information processing system may include the "equipment management function". In addition, the HDD 108 may manage the various program and the various data stored therein in the form of a predetermined file system and/or a DB (Data Base).

The drive unit 103 provides an interface between the equipment managing apparatus 100 and a detachable recording medium 103a. The equipment managing apparatus 100 may read information from and/or write information on the recording medium 103a via the drive unit 103.

The ROM 105 may be formed by a nonvolatile semiconductor memory (or storage device) and hold internal data even when the power is turned OFF. The ROM 105 may store a BIOS (Basic Input/Output System) that is executed when the equipment managing apparatus 100 is booted, and data related to a system setting and a network related setting of the equipment managing apparatus 100.

The RAM 104 may be formed by a volatile semiconductor memory (or storage device) and temporarily hold programs and data read from the various storage devices described above. The CPU 106 may read the programs into the RAM 104 and execute the programs, in order to control the entire equipment managing apparatus 100.

The equipment managing apparatus 100 may provide information processing services (or information processing functions) including equipment management, by utilizing the hardware structure described above.

As may be seen from the hardware structure of the equipment managing apparatus 100, the structure of the equipment managing apparatus 100 is approximately the same as that of the client PC 300.

### «Electronic Equipment: Image Processing Apparatus»

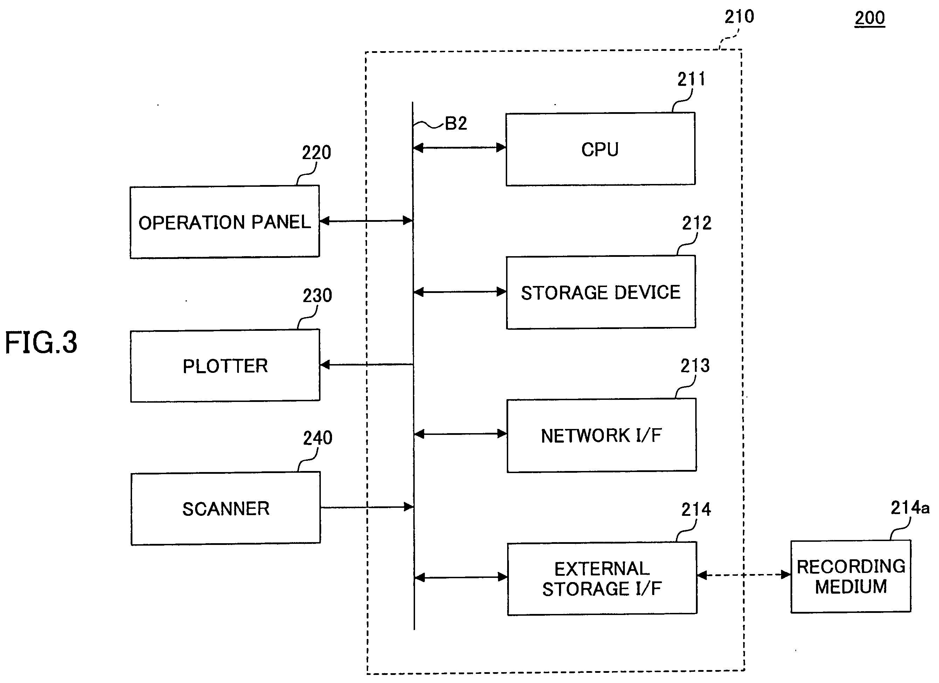

FIG. 3 is a block diagram illustrating an example of a hardware structure of the electronic equipment in the first embodiment of the present invention. In this embodiment, the electronic equipment 200, that is the management target, is formed by the image processing apparatus.

As illustrated in FIG. 3, the electronic equipment 200 includes a controller 210, an operation panel 220, a plotter 230, and a scanner 240 that are mutually connected via a bus B2.

The operation panel 220 may include a display part and an input part for providing various information such as equipment information to the user, and accepting various user operations such as operation settings and operation instructions. The plotter 230 may includes an image forming part for forming an output image on a recording medium such as paper. For example, the output image may be formed using the electrophotography technique or the ink-jet recording technique. The scanner 240 may optically read a document and generate an image (that is, a read image) of the read document.

The controller 210 may include a CPU 211, a storage device 212, a network interface (I/F) 213, and an external storage interface (I/F) 214 that are mutually connected via the bus B2.

The CPU 211 may execute the programs in order to control the entire electronic equipment 200. The storage device 212 may store and hold the programs and the various data (for example, image data). For example, the storage device 212 may include a volatile memory such as a RAM, a nonvolatile memory such as a ROM, and a relatively large storage region provided by a HDD or the like. The RAM may function as a work area for the CPU 211 for use in temporarily holding the programs and the data. The ROM and the HDD may function as a storage destination for the programs and the various data. Hence, in the electronic equipment 200, the CPU 211 reads the programs stored in the ROM into the RAM, and executes the programs read into the RAM.

The network I/F 213 provides an interface for connecting the electronic equipment 200 to a predetermined data channel N. The external storage I/F 214 provides an interface for connecting the electronic equipment 200 to a recording medium 214a that forms an external storage device. For example, the recording medium 214a may be formed by a SD (Secure Digital) memory card, a USB (Universal Serial Bus) memory, or the like. Hence, the electronic equipment 200 may read the programs and the data stored in the recording medium 214a via the external storage I/F 214.

The electronic equipment 200 having the hardware structure described above may provide image processing services (or image processing functions) with respect to the user.

In the equipment management system 1 of this embodiment, the equipment managing apparatus 100 and the electronic equipment 200 are linked in order to update one or a plurality of application software (or programs) that realize the functions of the electronic equipment 200.

### <Software Update Function>

Next, a description will be given of a software update function of this embodiment.

In the equipment management system 1 of this embodiment, the equipment managing apparatus 100 holds updating data (or archive data) in a predetermined storage region. The updating data may include definition data defining software information of the application software that functions in the electronic equipment 200, and module data (or updating program) of the application software. The equipment management system 1 performs the software update of the equipment management in the following manner. That is, the equipment managing apparatus 100 judges whether the updating data exists, and sends the updating data to the electronic equipment 200 based on the judgement result. The electronic equipment 200 temporarily unpacks (or decompresses) the received updating data, and judges whether the application software may be updated. The "unpacking (or decompression)" of the updating data will be described later. Based on the judgement result of the electronic equipment 200, the electronic equipment 200 sends the unpacked module data to the application software and requests the software update. The equipment management system 1 has the software update function that is realized by the above described link between the equipment managing apparatus 100 and the electronic equipment 200.

Recently, the operating environment of the electronic equipments 200 such as the image processing apparatuses has become flexible. For this reason, the application software that runs on the electronic equipment 200 may be developed by various software vendors. In addition, because the functions of the electronic equipments such as the image processing apparatuses have diversified, the application software may be developed by different sections or departments even within the same equipment manufacturer. The software update procedure and the configuration may differ for each application software due to the different vendors or developing environments. Accordingly, the user must cope with each individual application software because the software update procedure and the configuration may differ for each application software, and the user must perform an updating operation that takes into consideration each application software that functions in the electronic equipment. In such a situation, the software update operation to be performed by the user is a troublesome operation.

Accordingly, in the equipment management system 1 of this embodiment, the updating data, formed by archived data necessary for the software update, is sent from the equipment managing apparatus 100 to the electronic equipment 200 in order to request the software update with respect to the application software.

Hence, the equipment management system 1 of this embodiment may perform a batch update with respect to plural application software that run on the electronic equipment 200, without requiring the user to be aware of the software update procedure and the configuration that may differ for each application software, when performing the software update operation. The user does not need to cope with each individual application software.

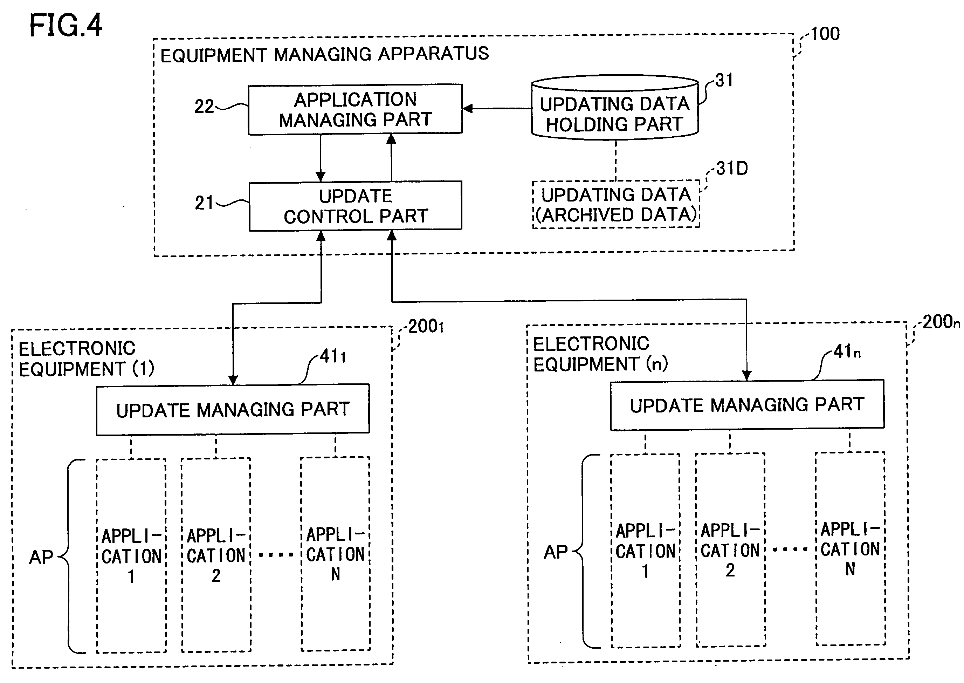

Next, a description will be given of the structure and operation of the software update function described above. FIG. 4 is a diagram illustrating an example of a functional structure of the equipment management system in the first embodiment of the present invention.

As illustrated in FIG. 4, the equipment management system 1 includes an update control part 21, an application managing part 22, an updating data holding part 31, and an update managing part 41.

### «Function Parts of Equipment Managing Apparatus»

The equipment managing apparatus 100 has function parts including an update control part 21, an application managing part 22, and an updating data holding part 31.

The update control part 21 controls the processes related to the software update, including sending updating data 31D with respect to the electronic equipment 200 and requesting the software update. More particularly, the update control part 21 acquires the updating data 31D from the application managing part 22, and sends the acquired updating data 31D to the electronic equipment 200 in order to request the software update. In addition, the update control part 21 receives a notification from the electronic equipment 200 indicating that the software update has been completed.

The application managing part 22 manages the updating data 31D. As described above, the updating data 31D includes archived data necessary for the software update, and the archived data is formed by a plurality of data that are packed or combined into one data. The updating data 31D may be stored and held in the updating data holding part 31. This updating data holding part 31 may be formed by a predetermined storage region of the storage device of the equipment managing apparatus 100, such as the HDD 108.

Next, a description will be given of the updating data 31D that is managed by the application managing part 22.

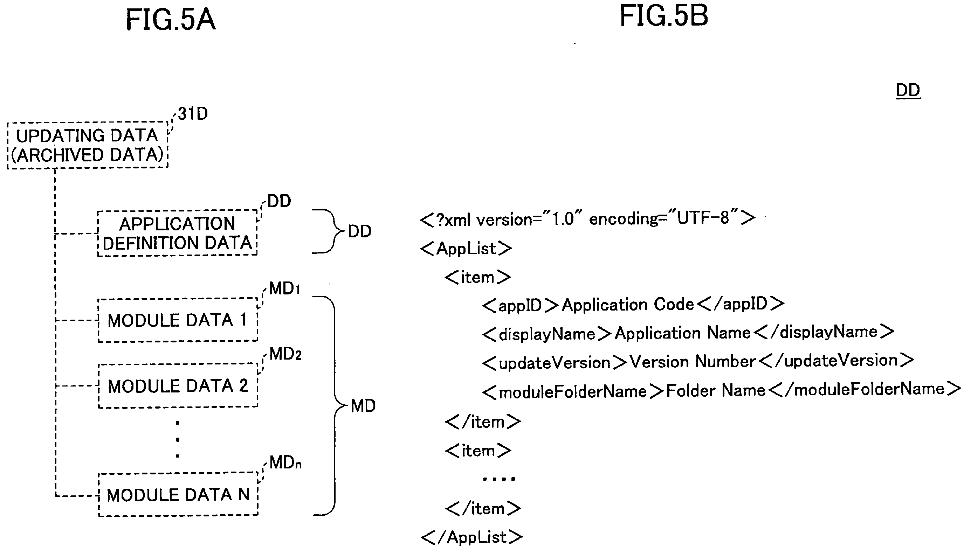

FIGS. 5A and 5B are diagrams for explaining an example of the updating data in the first embodiment of the present invention.

As illustrated in FIG. 5A, the updating data 31D includes an application definition data DD, and one or a plurality of module data MD.

The application definition data DD defines software information of application software AP that functions on the electronic equipment 200. For example, the application definition data DD defines the software information indicated in FIG. 5B. As illustrated in FIG. 5B, the software information defined by the application definition data DD includes identification information (definition data of <appID>tag) identifying the application software AP, application name information (definition data of <displayName> tag) indicating a name of the application software AP, version information (definition data of <updateVersion> tag) indicating an updated version (that is, version after the update) of the application software AP, and storage destination information (definition data of <moduleFolderName> tag) indicating a storage destination (or storage location) of the application software AP. The storage destination is a relative file path from the application definition data DD after the updating data 31D is temporarily unpacked, for example.

In the application definition data DD, the software information is defined for each application software AP. In the data example illustrated in FIG. 5B, the software information is defined for each application software AP within an <ApplList> tag by an <item> tag. Hence, the software information of a plurality of application software AP may be defined within one application definition data DD.

The application definition data DD having the above described data structure may acquire the application name information, the version information, and the storage destination information of the application software AP based on the identification information.

The module data MD is formed by an updating program that is to replace, or to be added to the existing module when performing the software update. The number of module data MD differs for each application software AP, and the module data MD is stored at the storage destination that is defined for each application software AP.

The module data MD is temporarily unpacked from the updating data 31D, based on the storage destination information of the application definition data DD.

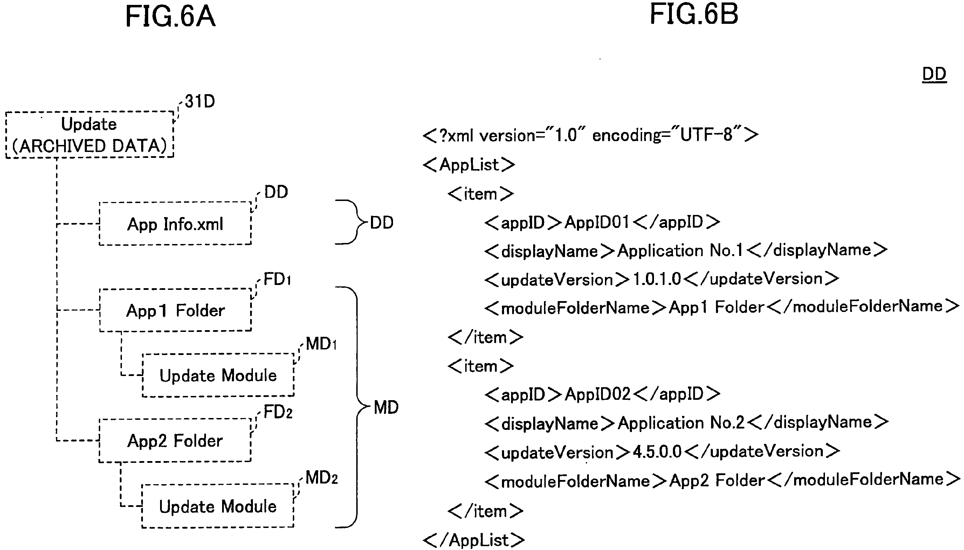

FIGS. 6A and 6B are diagrams for explaining another example of the updating data in the first embodiment of the present invention. FIGS. 6A and 6B illustrate the example of the updating data 31D in which the data necessary to update "Application No.1" and "Application No.2" are archived.

As illustrated in FIG. 6A, "App Info.xml" that is the application definition data DD, "Update Module" that is the module data MD1 corresponding to the "Application No.1", and "Update Module" that is the module data MD2 corresponding to the "Application No.2" are archived in the "Update" that is the updating data 31D.

In addition, as illustrated in FIG. 6B, identification information "ApplD01", application name information "Application No.1", version information "1.0.1.0", and storage destination information "Appl Folder" of the "Application No.1" are defined in the "App Info.xml" that is the application definition data DD. Furthermore, identification information "ApplD02", application name information "Application No.2", version information "4.5.0.0", and storage destination information "App2 Folder" of the "Application No.2" are defined in the "App Info.xml" that is the application definition data DD.

In addition, the "Update Module" that is the module data MD1 is stored under the storage destination information "Appl Folder" defined by the "App. Info.xml" that is the application definition data DD. The "Update Module" that is the module data MD2 is stored under the storage destination information "App2 Folder" defined by the "App. Info.xml" that is the application definition data DD.

FIGS. 5B and 6B illustrate data examples written in XML (extensible Markup Language), however, the data format of the application definition data DD is not limited to the XML. The data format of the application definition data DD may be any arbitrary data format that may be processed by the update managing part 41 which will be described later. The updating data 31D may be generated in advance when making the software update by the user who performs the software update, and stored in the updating data holding part 31. The user may create the application definition data DD, and prepare the module data MD corresponding to the application software AP that is the update target, in order to archive the application definition data DD and the module data MD using a predetermined tool.

Returning now to the description of FIG. 4, the application managing part 22 functions as follows. That is, the application managing part 22 makes an access to the updating data holding part 31 when an acquisition request from the update control part 21 is accepted, and judges whether the requested updating data 31D exists in the updating data holding part 31. The application managing part 22 transfers the requested updating data 31D to the update control part 21 at the request source if the requested updating data 31D exists in the updating data holding part 31. Hence, the update control part 21 may acquire the requested updating data 31D. The application managing part 22 may provide a function of creating the updating data 31D with respect to the user. For example, user may perform processes via a GUI (Graphical User Interface) provided by the application managing part 22 in order to create or edit the application definition data DD, add or delete the module data MD corresponding to the application software AP that is the update target, and generate (or archive) the updating data. As a result, the application managing part 22 may store the generated updating data 31D in the updating data holding part 31, according to a store instruction that is accepted from the user.

### <<Function Parts of Electronic Equipment>>

The update managing part 41 is included in the electronic equipment 200. FIG. 4 illustrates an example where the equipment managing apparatus 100 manages a plurality of electronic equipments 200₁ through 200ₙ. Hence, the electronic equipments 200₁ through 200ₙ respectively include update managing parts 41₁ through 41ₙ, that is, each electronic equipment 200 includes one update managing part 41. A description will hereinafter be given of the update managing part 41 included in one electronic equipment 200 that is the management target.

The update managing part 41 controls the process related to the software update. More particularly, the update managing part 41 functions as follows. The update managing part 41 temporarily unpacks the updating data 31D received from the equipment managing apparatus 100. The temporary "unpacking (or decompression)" of the updating data 31D refers to the unpacking (that is, decompression or decomposition) of the archived data into the individual constituent data and storage of the individual constituent data in the predetermined storage region of the storage device within the electronic equipment 200, such as the RAM or the HDD. In addition, the update managing part 41 judges whether the electronic equipment 200 to which the update managing part 41 belongs is in an updatable equipment state, based on an operation state of this electronic equipment 200. If the update managing part 41 judges that the electronic equipment 200 to which the update managing part 41 belongs is in the updatable equipment state, the update managing part 41 sends the unpacked application definition data DD to the application software AP, and requests update confirmation. Hence, in the electronic equipment 200, a software update confirmation process is transferred to the application software AP. Moreover, the update managing part 41 sends the unpacked module data MD to the application software AP that is the update target, upon receipt of a request from this application software AP, and requests the software update. Accordingly, in the electronic equipment 200, the software update is performed according to the software update procedure and the configuration for each application software AP. Thereafter, the update managing part 41 receives an update result notification from the application software AP that requested the software update, and notifies the equipment managing apparatus 100 of this update result notification.

Therefore, the software update function in this embodiment is realized by the linked operations of each of the function parts described above.

Next, a more detailed description will be given of the operation (linked operations of the group of function parts) of the software update function, by referring to sequence diagrams illustrating the processing procedures.

The software update function may be realized when the programs (software parts realizing the software update function) installed in the equipment managing apparatus 100 and the electronic equipment 200 are read by the control part (for example, CPU) from the storage destination (for example, HDD or ROM), and the following processes are executed.

In addition, the processes related to the software update may include the following processing procedures. According to one processing procedure, the electronic equipment 200 actively acquires the updating data 31D from the equipment managing apparatus 100, in order to execute the software update thereof. In other words, the electronic equipment 200 acts as a trigger for the execution of the software update. According to another processing procedure, the electronic equipment 200 passively receives the updating data 31D from the equipment managing apparatus 100, in order to execute the software update thereof. In other words, the equipment managing apparatus 100 acts as a trigger for the execution of the software update. Therefore, according to the equipment management system 1 of this embodiment, the processing procedures may be categorized depending on how the electronic equipment 200 receives the updating data 31D from the equipment managing apparatus 100, that is, depending on whether the equipment managing apparatus 100 or the electronic equipment 200 acts as the trigger for the execution of the software update. The two processing procedures respectively categorized depending on how the electronic equipment 200 receives the updating data 31D from the equipment managing apparatus 100 will now be described.

### «Process in Which Electronic Equipment Actively Acquires Updating Data»

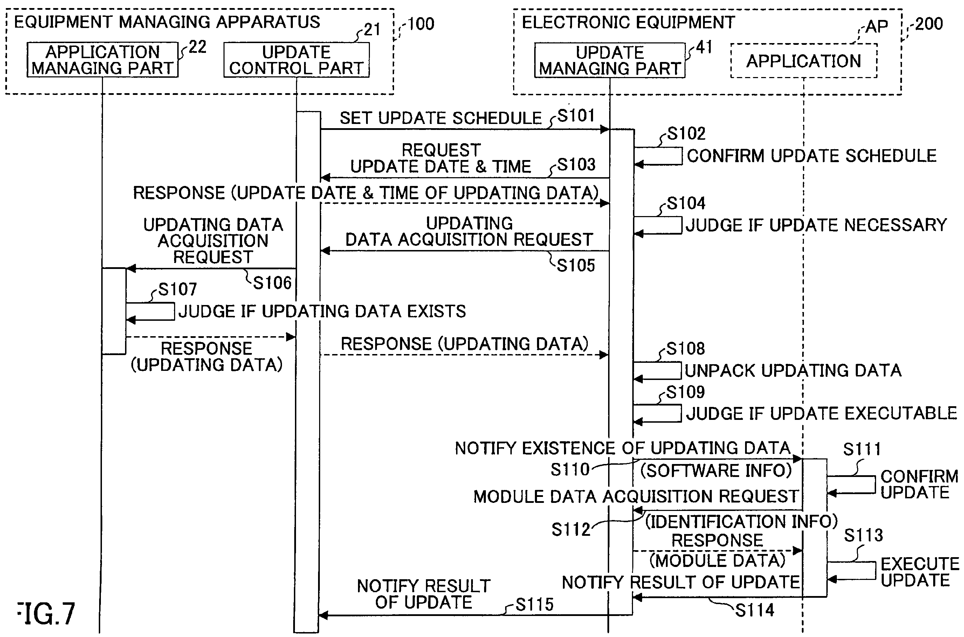

FIG. 7 is a sequence diagram for explaining an example of the software update procedure of the equipment management in the first embodiment of the present invention.

As illustrated in FIG. 7, the update control part 21 of the equipment managing apparatus 100 sends setting information related to a software update schedule with respect to the update managing part 41 of the electronic equipment 200, and registers the update schedule (step S101). The setting information may include predetermined intervals (for example, date or time) at which the processes related to the software update are to be executed in the electronic equipment 200. The update schedule determines an execution timing of the software update, and may be determined or set in advance by the user according to maintenance and operation policies of the equipment management system 1. In the equipment managing apparatus 100, the same update schedule may be set by a batch process with respect to all electronic equipments 200 that are management targets, or different update schedules may be set with respect to the electronic equipments 200 that are management targets.

The update managing part 41 of the electronic equipment 200 refers to the registered setting information, and confirms the update schedule (step S102).

The update managing part 41 makes an acquisition request for the update date and time of the updating data 31D, with respect to the update control part 21 of the equipment managing apparatus 100 according to the software update execution timing that is based on the setting information (step S103). As a result, the update managing part 41 acquires, as response information from the update control part 21, the update date and time information of the updating data 31D.

The update managing part 41 judges whether the software update is necessary in the electronic equipment 200 to which this update managing part 41 belongs, based on the acquired update date and time information (step S104). The update managing part 41 may make this judgement in the following manner. That is, the update managing part 41 may judge whether the updating data 31D has been updated within a predetermined time from the present date and time, based on the acquired update date and time information. The update managing part 41 judges that the software update is necessary in the electronic equipment 200 to which this update managing part 41 belongs, if it is judged that the updating data 31D has been updated within the predetermined time. In other words, the update managing part 41 confirms the freshness of the updating data 31D that is managed by the equipment managing apparatus 100, in order to judge whether the software update is necessary in the electronic equipment 200 to which this update managing part 41 belongs.

The update managing part 41 makes an acquisition request for the updating data 31D with respect to the update control part 21 of the equipment managing part 100, if it is judged that the software update is necessary (step S105). On the other hand, the process returns to the step S102 if it is judged that the software update is unnecessary, and the next execution timing of the software update is made to wait.

When the equipment managing apparatus 100 receives the acquisition request for the updating data 31D, the update control part 21 makes an acquisition request for the updating data 31D with respect to the application managing part 22 (step S106).

When the application managing part 22 receives the acquisition request for the updating data 31D, the application managing part 22 makes an access to the updating data holding part 31 and judges whether the updating data 31D exists (step S107).

If the application managing part 22 judges that the updating data 31D exists in the updating data holding part 31, the application managing part 22 transfers the updating data 31D to the update control part 21, and responds to the request source. The update control part 21 sends the updating data 31D transferred thereto to the update managing part 41 of the electronic equipment 200, and responds to the request source. Accordingly, in the equipment management system 1, the updating data 31D in which the data necessary for the software update are archived is sent from the equipment managing apparatus 100 to the electronic equipment 200 that is the management target. On the other hand, if it is judged that the updating data 31D does not exist, an acquisition error response is sent with respect to the update control part 21 at the request source. This acquisition error response may be returned to the update managing part 41 of the electronic equipment 200 via the update control part 21 at the request source. In this case, the electronic equipment 200 waits until the next execution timing of the software update. In the equipment managing apparatus 100, an acquisition error is notified to the user if it is judged that the updating data 31D does not exist.

The update managing part 41 of the electronic equipment 200 temporarily unpacks the updating data 31D acquired from the equipment managing apparatus 100 (step S108). In other words, the update managing part 41 unpacks the archived data to the predetermined storage region of the storage device within the electronic equipment 200.

After the unpacking of the archived data, the update managing part 41 judges whether the software update is executable in the electronic equipment 200 to which this update managing part 41 belongs, based on the operation state of the electronic equipment 200 (step S109). The update managing part 41 may judge whether the software update is executable in the following manner. That is, the update managing part 41 may acquire the state information related to the operation state of the electronic equipment 200 to which the update managing part 41 belongs, from an event notification, a system log, or the like. The state information that is acquired may indicate the operation state such as the operation state of the hardware or the software installed in the electronic equipment 200. The update managing part 41 judges whether the application software AP is in an updatable state, based on the acquired state information. The functions installed in the electronic equipment 200 are operable in a normal manner in the updatable state thereof. On the other hand, the hardware installed in the electronic equipment 200 has failed (for example, a failure of the storage device has occurred), for example, in a non-updatable state thereof, and in this case, the electronic equipment 200 is in a maintenance state or a service call generated state. In the non-updatable state of the electronic equipment 200, the electronic equipment 200 may be in a function stopped state in which the installed software is forcibly ended or forcibly stopped.

The update managing part 41 analyzes the operation state of the electronic equipment 200 to which the update managing part 41 belongs, and judges that the software update is executable if it is judged that the electronic equipment 200 is in the updatable state.

On the other hand, if it is judged that the electronic equipment 200 is in the non-updatable state, the data unpacked in the step S107 is temporarily held, and the software update is made to wait until the software update becomes executable (that is, until the cause of the non-updatable state is removed). Hence, the number of times the updating data 31D is sent (or the number of transmissions) from the equipment managing apparatus 100 to the electronic equipment 200 may be reduced, to thereby reduce the communication load related to the software update.

If it is judged that the software update is executable, the update managing part 41 notifies that the updating data 31D exists with respect to all application software AP that is operating in a normal manner (step S110). In this state, the update managing part 41 sends to the application software AP, as notification information, the software information (for example, the application name information, the storage destination information, or the like) of the unpacked application definition data DD.

Based on the received software information, the application software AP confirms whether application software AP itself is the update target (step S111). Each application software AP performs an update confirmation in the following manner. That is, the application software AP judges whether the application software itself is the update target, based on the identification information included in the software information. The application software AP compares the updated version indicated by the version information included in the software information and the present version of the application software AP itself, and recognizes that the application software AP itself is the update target if the updated version is newer (or more recent) that the present version. On the other hand, the subsequent processes described hereunder are not performed if the updated version is or is older than the present version.

The application software AP that is the update target makes an acquisition request for the module data MD necessary to perform the software update thereof, with respect to the update managing part 41 (step S112). In this state, the application software AP that is the update target species the identification information of thereof and makes an acquisition request for the corresponding module data MD, with respect to the update managing part 41.

Upon receipt of the acquisition request, the update managing part 41 transfers the module data MD with respect to the application software AP and responds to the request source. Hence, in the electronic equipment 200, the software update is requested with respect to the application software AP.

The application software AP that is the update target uses the acquired module data MD, and executes the software update according to the updating procedure and the configuration for each application software AP (step S113).

The application software AP that is the update target notifies the execution result of the software update to the update managing part 41 (step S114).

The update managing part 41 notifies the execution result of the software update to the update control part 21 of the equipment managing apparatus 100 (step S115). Accordingly, in the equipment managing apparatus 100, it is possible to confirm whether the software update has been performed in a normal manner in the electronic equipment 200 that is the management target. When the update managing part 41 confirms a normal end of the software update in the electronic equipment 200 from the execution result of the software update, the update managing part 41 erases the data unpacked in the step S107 described above.

### « Process in Which Electronic Equipment Passively Receives Updating Data»

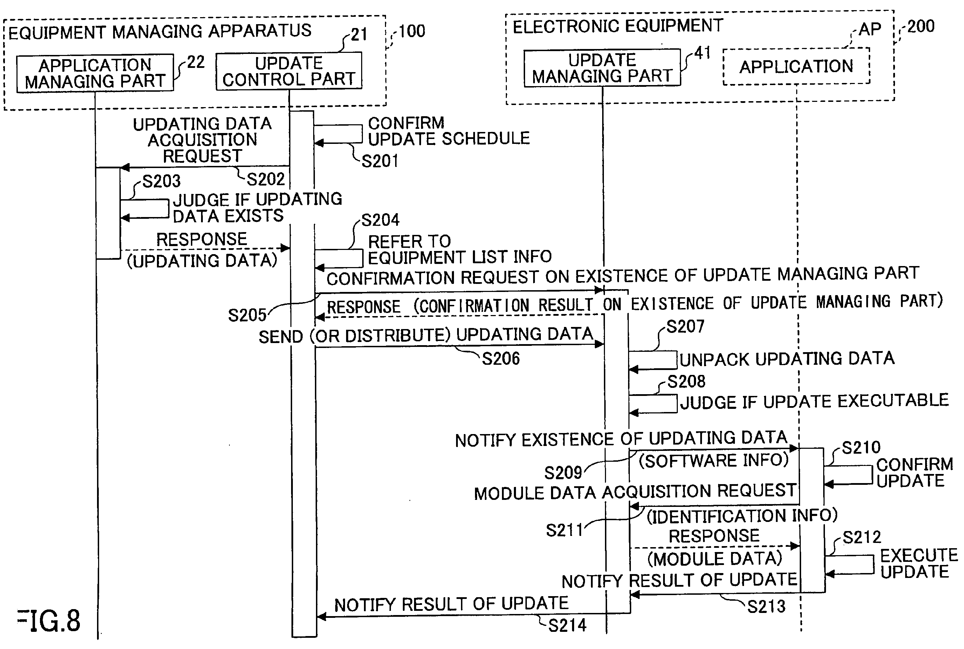

FIG. 8 is a sequence diagram for explaining another example of the software update procedure of the equipment management in the first embodiment of the present invention. In the procedure illustrated in FIG. 8, steps S201 through S206 differ from those of the procedure illustrated in FIG. 7. However, steps S207 through S214 illustrated in FIG. 8 correspond to the steps S108 through S116 illustrated in FIG. 7, and a description thereof will be omitted.

As illustrated in FIG. 8, the update control part 21 of the equipment managing part 100 refers to the setting information of the software update schedule, and confirms the update schedule (step S201).

The update control part 21 makes an acquisition request for the updating data 31D with respect to the application managing part 22, according to the software update execution timing that is based on the setting information (step S202).

Upon receipt of the acquisition request, the application managing part 22 makes an access to the updating data holding part 31 and judges whether the updating data 31D exists (step 5203).

If it is judged that the updating data 31D exists, the application managing part 22 transfers the updating data 31D to the update control part 21, and responds to the request source.

When the update control part 21 acquires the updating data 31D, the update control part 21 refers to equipment list information in which the electronic equipment 200 is registered (step S204), and makes a request with respect to the electronic equipment 200 registered in the equipment list information (hereinafter referred to as a registered electronic equipment 200) to confirm whether this electronic equipment 200 includes the update managing part 41 (step S205). The equipment list information is held by the equipment managing apparatus 100 in order to perform the equipment management. The equipment list information includes the identification information of the electronic equipment 200, such as an IP (Internet Protocol) address and the MAC (Media Access Control) address. Hence, the equipment managing apparatus 100 may acquire the equipment state information or the like from the electronic equipment 200, based on the identification information of the equipment list information, and attend to the monitoring or maintenance of the electronic equipment 200.

The update control part 21 specifies the identification information of the equipment list information, and requests confirmation of the existence of a functioning update managing part 41, with respect to the registered electronic equipment 200. As a result, the update control part 21 acquires a confirmation result on the existence of the functioning update managing part 41, as response information from the electronic equipment 200. Hence, the update control part 21 may judge from the confirmation result whether the updating data 31D is receivable by the electronic equipment 200.

The update control part 21 sends (or distributes) the updating data 31D with respect to each electronic equipment 200 that is capable of receiving the updating data 31D (step S206).

As a result, the steps S207 through S214 are executed in the electronic equipment 200, to thereby effect the software update of the application software AP.

The processing procedure in which the electronic equipment (that is, the management target equipment) 200 actively acquires the updating data 31D was compared to the processing procedure in which the electronic equipment (that is, the management target equipment) 200 passively receives the updating data 31D. As a result of this comparison, it was found that the processing procedure in which the electronic equipment 200 actively acquires the updating data 31D may have a reduced processing time for the software update as compared to that of the processing procedure in which the electronic equipment 200 passively receives the updating data 31D. In the case of the processing procedure in which the electronic equipment 200 passively receives the updating data 31D, the equipment managing apparatus 100 distributes the updating data 31D with respect to all electronic equipments 200 capable of receiving data, and the communication time and the processing time increase if the number of electronic equipments 200 is relatively large. On the other hand in the case of the processing procedure in which the electronic equipment 200 actively acquires the updating data 31D, the equipment managing apparatus 100 distributes the updating data 31D only with respect to the electronic equipments 200 that are judged as requiring the software update, and the communication time and the processing time may be reduced compared to those of the processing procedure in which the electronic equipment 200 passively receives the updating data 31D.

### <Features of First Embodiment>

According to the equipment management system 1 of this embodiment, the equipment managing apparatus 100 holds the updating data 31D, including the application definition data DD and the one or plurality of module data MD (or updating program), in the updating data holding part 31. In addition, the equipment management system 1 performs the software update of the equipment management in the following manner. That is, the application managing part 22 of the equipment managing apparatus 100 judges whether the updating data 31D exists, and the update control part 21 sends the updating data 31D to the electronic equipment 200 that is the management target, based on the judgement result on the existence of the updating data 31D. The update managing part 41 of the electronic equipment 200 temporarily unpacks the received updating data 31D, and judges whether the application software AP may be updated. Based on the judgement result on the updatability of the application software AP, the update managing part 41 sends the unpacked module data MD to the application software AP, and requests the software update.

In other words, in the equipment management system 1, the updating data 31D in which the data necessary for the software update are archived is sent from the equipment managing apparatus 100 to the electronic equipment 200 that is the management target, and requests the software update with respect to the application software AP.

Therefore, when performing the software update of the application software that runs on the electronic equipments 200 in the equipment management system 1, the user does not need to be aware of the differences in the updating procedure and the configuration among the application software, and a batch update may be performed with respect to plural application software that run on the electronic equipment. In addition, when developing the updating module, the developer and the provider of the application software do not need to be aware of the exchanges made between the equipment managing apparatus 100 and the electronic equipment 200 that is the management target when performing the software update. For this reason, the developer and the provider of the application software may develop the updating module efficiently and quickly.

### [Second Embodiment]

The method of providing the application software to the users is not limited to the method that distributes the application software via recording media. The application software may be provided to the users by a method that distributes the application software via an external network, such as the Internet.

Next, a description will be given of the software update function in the equipment management system of the second embodiment for a case where the application software is distributed via the external network. In the following description, only the parts, features or functions different from those of the first embodiment will be described. Further, those parts of the second embodiment that are the same as those corresponding parts of the first embodiment are designated by the same reference numerals, and a description thereof will be omitted.

### <System Structure>

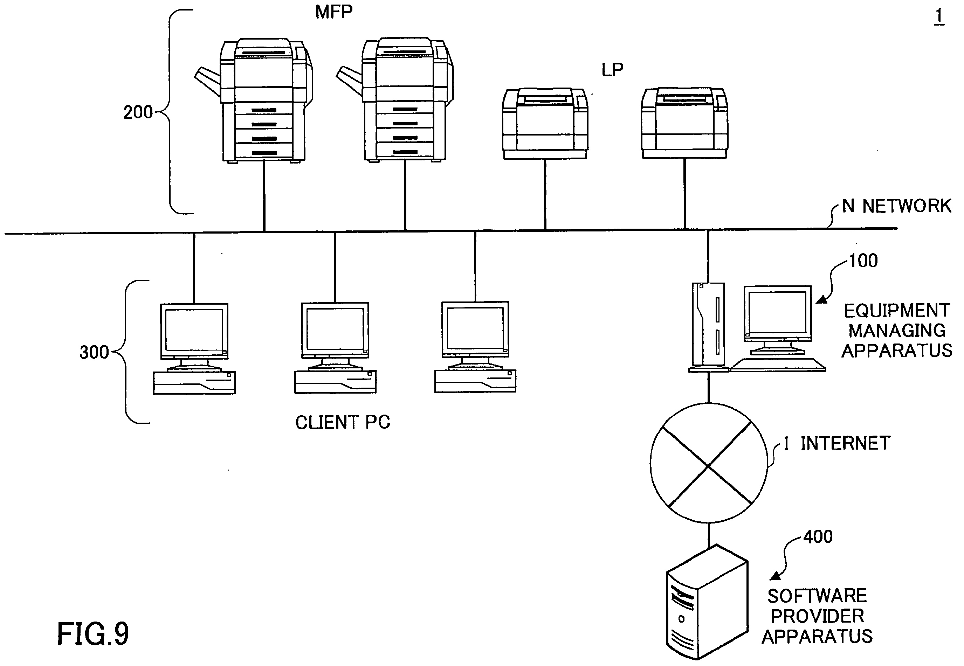

FIG. 9 is a diagram illustrating an example of the structure of the equipment management system in the second embodiment of the present invention.

As illustrated in FIG. 9, an equipment management system 1 includes an equipment managing apparatus 100 and a software provider apparatus (or application server) 400 that are connected via the Internet I. The equipment managing apparatus 100 may be connected to the Internet I via a firewall. Because the firewall is a function that may be provided by software, the firewall may run on the equipment managing apparatus 100 or may run on a dedicated equipment.

The software provider apparatus 400 may be formed by an information processing apparatus configured to manage application software AP that runs on the electronic equipment 200 that is the management target by use of the DB (Data Base), and to provide the application software AP in response to a request. Hence, the developer or provider of the application software AP may provide or distribute the developed module to the user by registering the developed module in the DB of the software provider apparatus 400.

A hardware structure of the software provider apparatus 400 may be similar to the hardware structure of the equipment managing apparatus 100 illustrated in FIG. 2, and a description thereof will be omitted.

### <Software Update Function>

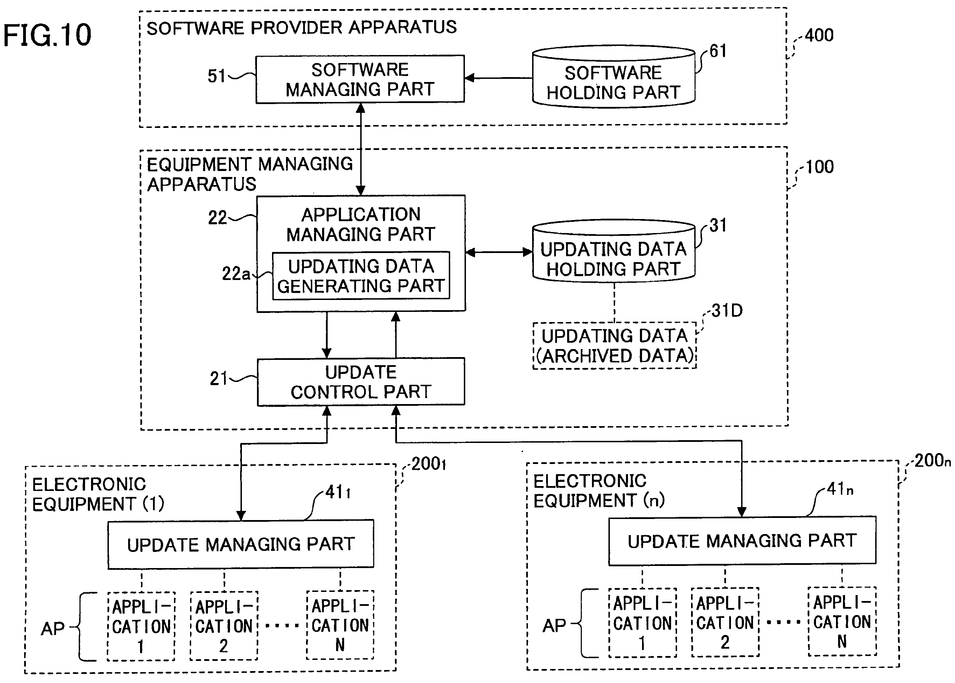

FIG. 10 is a diagram illustrating an example of a functional structure of the equipment management system in the second embodiment of the present invention.

Function parts included within the software provider apparatus 400 and an application managing part 22 within the equipment managing apparatus 100 illustrated in FIG. 10 differ from the function parts of the first embodiment described above.

### «Function Parts of Software Provider Apparatus»

The function parts of the software provider apparatus 400 include a software managing part 51 and a software holding part 61.

The software managing part 51 manages the application software AP. The application software AP is stored and held in the software holding part 61. The software holding part 61 corresponds to a DB (or a group of predetermined storage regions) that may be formed by the storage device (for example, HDD) of the software provider apparatus 400, for example. The software holding part 61 holds the corresponding data for each application software AP in the DB. More particularly, the software holding part 61 holds, for each application software AP, software information (for example, the identification information, the application name information, the version information, and the like) for each application software AP, and one or a plurality of module data MD (or updating programs). The software information and the module data MD may be stored in the software holding part 61 by the software developer or provider. The software developer or provider may store the software information and the module data MD in the software holding part 61 using a predetermined tool.

The software managing part 51 makes an access to the software holding part 61, and performs a data registration, a data deletion, a data updating, a data search, a data acquisition, or the like, by carrying out a predetermined data manipulation, in order to manage the application software AP. More particularly, the software managing part 51 performs the following operation. That is, the software managing part 51 accepts a software acquisition request from the equipment managing apparatus 100. The software managing part 51 makes an access to the software holding part 61 by carrying out a data manipulation based on the software acquisition request, and acquires the corresponding data (that is, the software information and the module data MD of the application software AP requested by the software acquisition request). The software managing part 51 sends the acquired data to the equipment managing apparatus 100, and responds to the request source. Hence, the equipment managing apparatus 100 may acquire the most recent software information and module data MD for the application software AP.

The software managing part 51 may provide the data manipulation function of the software holding part 61 with respect to the software developer or provider. For example, the software developer or provider may create or edit the software information and add or delete the module data MD corresponding to the application software AP, via a GUI provided by the software managing part 51. As a result, the software managing part 51 may store each data in the software holding part 61 according to a store instruction accept from the software developer or provider.

### «Application Managing Part of Equipment Managing Apparatus»

The function parts of the application managing part 22 include an updating data generating part 22a. The updating data generating part 22a generates updating data 31D.

In the first embodiment described above, the updating data 31D is generated in advance by the user who performs the software update, and the updating data 31D is stored in the updating data holding part 31. On the other hand, in this second embodiment, the application managing part 22 also has a function of automatically generating the updating data 31D. In other words, the updating data generating part 22a archives the data necessary for the software update, in order to generate the updating data 31D.

The updating data generating part 22a functions in the following manner. That is, the updating data generating part 22a generates (or updates) the application definition data DD based on the software information of the application software AP acquired from the software provider apparatus 400. The updating data generating part 22a archives the module data MD acquired from the software provider apparatus 400 and the application definition data DD that is generated (or updated), and generates the updating data 31D. The updating data 31D that is generated is stored in the updating data holding part 31 by the application managing part 22. In this state, if an existing updating data 31D is held in the updating data holding part 31, the updating data 31D is updated by writing (that is, overwriting) the generated updating data 31D over the existing updating data 31D.

Accordingly, in the equipment managing apparatus 100, the updating data 31D is generated automatically when the data of the application software AP is acquired from the software provider apparatus 400, and the data held in the updating data holding part 31 is updated.

Next, a more detailed description will be given of the software update function of this embodiment, namely, the linked operation of the group of the function parts, by referring to sequence diagrams illustrating the processing procedures.

The software update function is realized by reading the programs (or software parts realizing the software update function) installed in the equipment managing apparatus 100, the electronic equipment 200, and the software provider apparatus 400 from the storage destination (for example, the HDD or the ROM) by the control part (for example, the CPU), and executing the following processes.

In addition, the processing procedure related to the software update may mainly include one of the following processes. According to one process, the software provider apparatus 400 may act as a trigger for the execution of the software update. According to another process, the equipment managing apparatus 100 may act as a trigger for the execution of the software update. Hence, in the equipment management system 1 of this embodiment, either the software provider apparatus 400 or the equipment managing apparatus 100 may act as the trigger for the execution of the software update, and the processing procedure will now be described for each of the two processes.

### «Process in Which Software Provider Apparatus Acts as Trigger for Execution of Software Update»

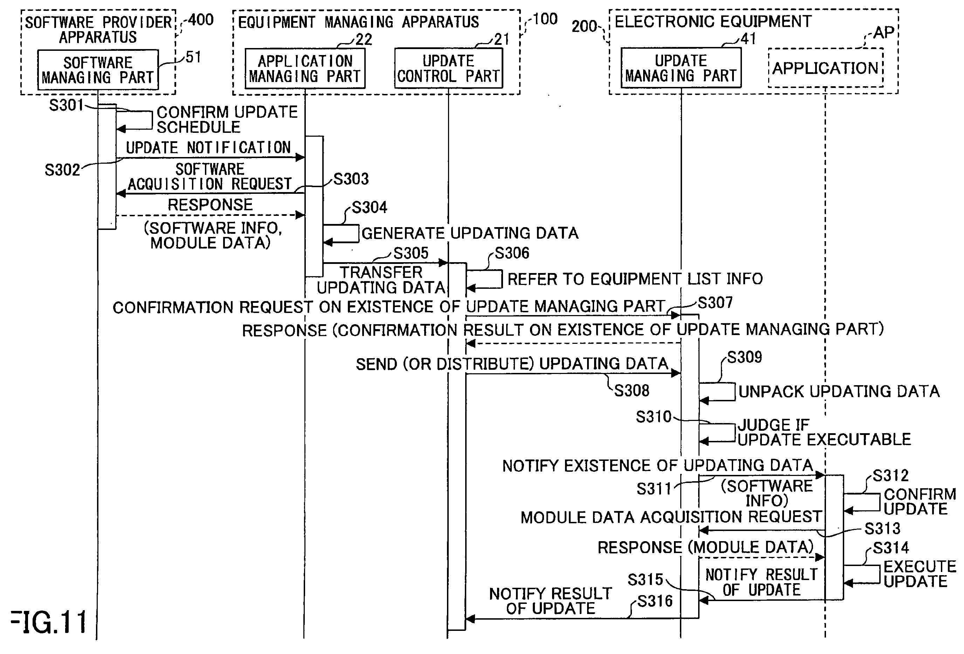

FIG. 11 is a sequence diagram for explaining an example of the software update procedure of the equipment management in the second embodiment of the present invention. In FIG. 11, steps S306 through S316 are the same as the steps S204 through S214 illustrated in FIG. 8, and a description thereof will be omitted. Steps S301 through S305 illustrated in FIG. 11 differ from the steps of the processing procedure illustrated in FIG. 8.

As illustrated in FIG. 11, the software provider apparatus 400 refers to the setting information of the software update schedule by the software managing part 51, and confirms the update schedule (step S301).

The software managing part 51 notifies the execution of the software update with respect to the application managing part 22 of the equipment managing apparatus 100, according to a software update execution timing based on the setting information (step S302).

When the equipment managing apparatus 100 receives the notification on the execution of the software update, the application managing part 22 requests acquisition of the application software AP (that is, makes a software acquisition request) with respect to the software managing part 51 of the software provider apparatus 400 (step S303). The application managing part 22 specifies the identification information of the application software AP that runs on the electronic equipment 200, and requests acquisition of the corresponding data. The software managing part 51 refers to the software holding part 61 based on the identification information, and acquires the corresponding data that may include the software information and one or a plurality of module data MD. Thereafter, the software managing part 51 sends the acquired data (that is, the corresponding data) to the equipment managing apparatus 100, and responds to the request source. As a result, the application managing part 22 acquires, as the response information from the software managing part 51, the software information and the one or plurality of module data MD of the specified application software AP.

In the equipment managing apparatus 100, the updating data generating part 22a of the application managing part 22 generates the updating data 31D from the acquired software information and the one or plurality of module data MD (step S304).

The updating data generating part 22a updates the data by defining the identification information, the application name information, and the version information within the application definition data DD, based on the acquired software information. The updating data generating part 22a determines a storage structure of the acquired module data MD, based on the storage structure of the module data MD corresponding to another application software AP that is already managed. The storage structure corresponds to a directory structure for a case where the equipment managing apparatus 100 manages the data by file systems. The updating data generating part 22a defines the storage destination information within the application definition data DD based on the determined storage structure, and stores the acquired module data MD to the determined storage destination. The updating data generating part 22a generates the updating data 31D by archiving the updated application definition data DD and the one or plurality of module data MD that are stored.

The application managing part 22 stores the generated updating data 31D in the updating data holding part 31. In this state, if an existing updating data 31A is held in the updating data holding part 31, the generated updating data 31D is updated by writing (that is, overwriting) the generated updating data 31D over the existing updating data 31D.

The application managing part 22 transfers the generated updating data 31D to the updating control part 21 (step S305).

As a result, the processes of the steps S306 through S308 are executed in the equipment managing part 100, and the processes of the steps S309 through S316 are executed in the electronic equipment 200, to thereby perform the software update of the application software AP.

### <<Process in Which Equipment Managing Apparatus Acts as Trigger for Execution of Software Update>>

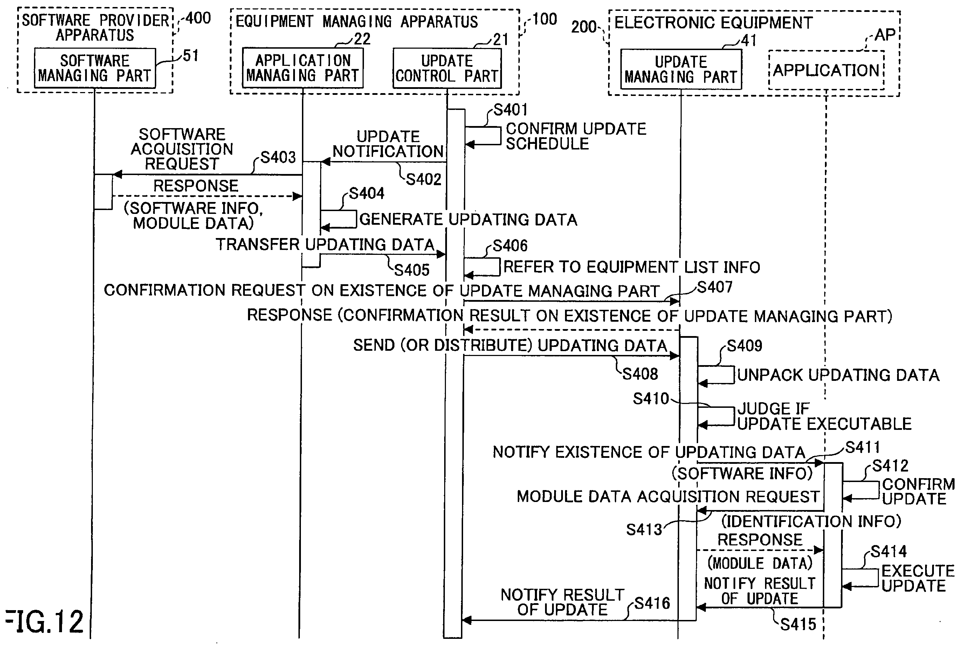

FIG. 12 is a sequence diagram for explaining another example of the software update procedure of the equipment management in the second embodiment of the present invention. In FIG. 12, steps S406 through S416 are the same as the steps S204 through S214 illustrated in FIG. 8, and a description thereof will be omitted. Steps S401 through S405 illustrated in FIG. 12 differ from the steps of the processing procedure illustrated in FIG. 8.

As illustrated in FIG. 12, the equipment managing apparatus 100 refers to the setting information of the software update schedule by the update control part 21, and confirms the update schedule (step S401).

The update control part 21 notifies the execution of the software update with respect to the application managing part 22 of the equipment managing apparatus 100, according to a software update execution timing based on the setting information (step S402).

When the equipment managing apparatus 100 receives the notification on the execution of the software update, the application managing part 22 requests acquisition of the application software AP (that is, makes a software acquisition request) with respect to the software managing part 51 of the software provider apparatus 400 (step S403). The software managing part 51 of the software provider apparatus 400 sends the software information and the one or plurality of module data MD of the specified application software AP to the application managing part 22 of the equipment managing apparatus 100, and responds to the request source.

In the equipment managing apparatus 100, the updating data generating part 22a of the application managing part 22 generates the updating data 31D from the acquired software information and the one or plurality of module data MD (step S404).

The application managing part 22 transfers the generated updating data 31D to the updating control part 21 (step S405).

As a result, the processes of the steps S406 through S408 are executed in the equipment managing part 100, and the processes of the steps S409 through S416 are executed in the electronic equipment 200, to thereby perform the software update of the application software AP.

### <Features of Second Embodiment>

According to the equipment management system 1 of this embodiment, the software update of the equipment management is performed in the following manner. That is, the application managing part 22 of the equipment managing apparatus 100 acquires the application software AP from the software provider apparatus 400. The application managing part 22 of the equipment managing apparatus 100 generates the updating data 31D (for example, the archived data of the application definition data DD and the one or plurality of module data MD (or updating programs)) from the acquired application software AP, and stores the updating data 31D in the updating data holding part 31. The application managing part 22 of the equipment managing apparatus 100 judges whether the updating data 31D exists, and the update control part 21 sends the updating data 31D to the electronic equipment 200 based on the result of judging the existence of the updating data 31D. The update managing part 41 of the electronic equipment 200 temporarily unpacks the received updating data 31D, and judges whether the application software AP is updatable. Based on the result of judging the updatability of the application software AP, the update managing part 41 sends the unpacked module data MD to the application software AP, and requests the software update.

In other words, the equipment management system 1 sends the data necessary for performing the software update from the software provider apparatus 400 to the equipment managing apparatus 100, and the equipment managing apparatus 100 archives the received data to generate the updating data 31D. Then, the equipment management system 1 sends the generated updating data 31D from the equipment managing apparatus 100 to the electronic equipment 200, and requests the software update with respect to the application software AP.

Hence, in the equipment management system 1, a batch update of plural application software that run on the electronic equipments 200 may be performed without requiring the user to be aware of the software update procedure and the configuration that may differ for each application software, even under an environment in which the application software is distributed via an external network.

The "software update function" of the equipment management system 1 of each of the embodiments described above may be realized by executing the processing procedures described above. The processing procedures may be executed by programs encoded by a programming language that suits the operating environment (or platform), which programs cause the control part (for example, the CPU) of each apparatus (for example, the equipment managing apparatus 100, the electronic equipment 200, and the software provider apparatus 400) to execute the processes of the processing procedures.

The programs may be stored in a computer-readable storage medium, including the recording medium 130a and 214a described above. For example, the recording medium 103a may be formed by a floppy disk (registered trademark), a CD (Compact disk), or a DVD (Digital Versatile Disk). For example, the recording medium 214a may be formed by a SD memory card or a USB memory.

The programs may be installed in each apparatus (for example, the equipment managing apparatus 100, the electronic equipment 200, and the software provider apparatus 400) by reading the program from the recording medium 103a by the drive unit 103 or by reading the program from the recording medium 214a via the external storage I/F 214. Because the equipment managing apparatus 100 and the software provider apparatus 400 respectively include the interface unit 107, the programs may be downloaded from a communication line such as the Internet I and installed in the equipment managing apparatus 100 and the software provider apparatus 400.

In each of the embodiments described above, the software update is automatically executed according to a predetermined schedule, however, the execution of the software update is not limited to such. For example, the user who performs the software update may execute the software update from the equipment managing apparatus 100 at an arbitrary timing. In this case, the equipment managing apparatus 100 receives the electronic equipment 200 that is the management target, and the application software AP, that are specified by the user, and performs the software update with respect to the specified electronic equipment 200 and the specified application software AP.

Of course, at least a portion of the first embodiment may be appropriately combined with at least a portion of the second embodiment in order to suit the needs of the user or to obtain an effect that is desired by the user.

## Claims

1. An equipment management system comprising:
an equipment managing apparatus (100);
at least one electronic equipment (200) to be managed; and
a data channel (N) coupling the at least one electronic equipment (200) and the equipment managing apparatus (100),
the equipment managing apparatus (100) comprising:
a holding part (31) configured to hold updating data (31D) in a predetermined storage region, the updating data (31D) including definition data in which software information of a software application that functions in the electronic equipment (200) is defined and which is suitable for updating software of a plurality of electronic equipment (200), and module data of the application software;
a first judging part (22) configured to judge whether the holding part (31) holds the updating data; and
a sending part (21) configured to send to each of the plurality of electronic equipment (200) a setting request for schedule information that enables judgment as to whether updating software of the electronic equipment (200) is necessary and to send the updating data (31D) to the electronic equipment (200) based on an updating data acquisition request sent from the electronic equipment (200) according to the schedule information,
the electronic equipment (200) comprising:
a receiving part configured to receive the schedule information from the equipment management apparatus (100) and the updating data (31D) sent from the equipment managing apparatus (100);
a second judging part configured to judge whether a software update of the application software is executable in the electronic equipment (200);
a third judging part configured to judge whether the software update is necessary according to a schedule of the received schedule information; and
a request part configured to request the software update with respect to the application software,
wherein the sending part (21) of the equipment managing apparatus (100) is configured to send the updating data (31D) to the electronic equipment (200) based on a judgement result of the first judging part (22); and
the request part of the electronic equipment (200) is configured to send the module data included in the updating data (31D) received by the receiving part to the application software based on a judgement result of the second judging part,
**characterized in that**
the third judging part is configured to send, if it is judged that the software update is necessary, to the equipment management apparatus (100) an updating data acquisition request including the definition data in which the software information of the software application for updating the software of the electronic equipment is defined, and the module data forming the software application.

2. The equipment management system as claimed in claim 1, wherein the second judging part judges whether the software update of the application software is executable in the electronic equipment (200), based on equipment state information obtained from the electronic equipment (200).

3. The equipment management system as claimed in claim 1 or 2, wherein the application software comprises:
a part configured to confirm whether the application software is a software updating target, based on the software information defined in the definition data included in the updating data (3 ID); and
a part configured to execute the software update of the application software using the module data, if it is confirmed that the application software itself is the software updating target.

4. The equipment management system as claimed in any of claims 1 to 3, wherein:
the third judging part is configured to judge whether the software update is necessary therein according to a predetermined schedule that determines an execution timing of the software update, based on an update date and time of the updating data (31D) acquired from the equipment managing apparatus (100), and to request sending of the updating data (31D) with respect to the electronic equipment (200) if it is judged that the software update is necessary in the electronic equipment (200).

5. The equipment management system as claimed in any of claims 1 to 3, wherein:
the first judging part (22) of the equipment managing apparatus (100) judges whether the holding part (31) holds the updating data (31D), according to a predetermined schedule that determines an execution timing of the software update, and sends the update data (31D) to the electronic equipment (200) when it is judged that the holding part (31) holds the updating data (31D).

6. The equipment management system as claimed in any of claims 1 to 3, further comprising:
a software provider apparatus (400), coupled to the predetermined data channel (N), configured to hold the application software in a predetermined storage region of a storage device, and to provide the application software in response to a request; and
the equipment managing apparatus (100) further comprises a generating part (22a) configured to generate the updating data (31 D) from the application software provided by the software provider apparatus (400), and sends the updating data generated by the generating part (22a)to the electronic equipment (200).

7. The equipment management system as claimed in claim 6, wherein the software provider apparatus (400) notifies the equipment managing apparatus (100) of execution of the software update according to a predetermined schedule that determines an execution timing of the software update, and provides the application software depending on a request from the equipment managing apparatus (100) that is notified of the execution of the software update.

8. The equipment management system as claimed in claim 6, wherein the equipment managing apparatus (100) further comprises a part configured to send a request with respect to the software provider apparatus (400) to provide the application software, according to a predetermined schedule that determines an execution timing of the software update.

9. The equipment management system as claimed in claim 1, wherein the generating part (22a) is configured to generate the updating data (31D) by archiving application definition data (DD) which is generated based on software information of the application software (AP) acquired from the software provider apparatus (400), and by archiving module data (MD) of the application software which is acquired from the software provider apparatus (400).

10. An electronic equipment (200) communicatable with an equipment managing apparatus (100) via a data channel (N), comprising:
a receiving part configured to receive module data of an application software and schedule information and updating data (31D) from an equipment managing apparatus (100), the updating data (3 ID) including definition data in which software information of a software application that functions in the electronic equipment (200) is defined, the schedule information describing a schedule for updating the application software;
a judging part, called second judging part, configured to judge whether a software update of application software that runs on the electronic equipment (200) is executable in the electronic equipment (200);
a judging part (41), called third judging part, configured to judge whether the software update is necessary according to a schedule of the received schedule information; and
a request part configured to request the software update with respect to the application software,
wherein the request part is configured to send the module data included in the updating data (31D) received by the receiving part to the application software based on a judgement result of the judging part,
**characterized in that**
the third judging part is configured to send, if it is judged that the software update is necessary, to the equipment management apparatus (100) an updating data acquisition request including the definition data in which the software information of the software application for updating the software of the electronic equipment is defined, and the module data forming the software application.

11. The electronic equipment (200) as claimed in claim 10, wherein the second judging part judges whether the software update of the application software is executable in the electronic equipment (200), based on equipment state information obtained from the electronic equipment (200).

12. The electronic equipment (200) as claimed in claim 10 or 11, wherein the application software comprises:
a part configured to confirm whether the application software is a software updating target, based on the software information defined in the definition data included in the updating data; and
a part configured to execute the software update of the application software itself using the module data (31D), if it is confirmed that the application software itself is the software updating target.

13. The electronic equipment (200) as claimed in any of claims 10 to 12, further comprising:
a third judging part configured to judge whether the software update is necessary therein according to a predetermined schedule that determines an execution timing of the software update, based on an update date and time of the updating data (31D) acquired from the equipment managing apparatus (100), and to request sending of the updating data (31D) with respect to the electronic equipment (200) if it is judged that the software update is necessary in the electronic equipment (200).

14. The electronic equipment (200) as claimed in any one of claims 10 to 13, wherein the generating part (22a) is configured to generate the updating data (31D) by archiving application definition data (DD) which is generated based on software information of the application software (AP) acquired from the software provider apparatus (400), and by archiving module data (MD) of the application software (AP) which is acquired from the software provider apparatus (400).

15. A computer-readable storage medium that stores a program which, when executed by a computer of an electronic equipment (200), causes the computer to perform a process comprising:
a generating procedure to generate updating data (31D) from application software;
a sending procedure to send the updating data (31D) from an equipment managing apparatus (100) to the electronic equipment (200);
a receiving procedure to receive module data of the application software, schedule information and updating data (31D) from an equipment managing apparatus (100), the updating data (31 D) including definition data in which software information of application software that functions in the electronic equipment (200) is defined, the schedule information describing a schedule for updating the application software;
a judging procedure, called second judging procedure, to judge whether a software update of application software that runs on the electronic equipment (200) is executable in the electronic equipment (200);
a judging procedure to be carried out by a judging part of the electronic equipment (200), called third judging procedure, to judge whether the software update is necessary according to the received schedule information; and
a request procedure to request the software update with respect to the application software,
wherein the request procedure sends the module data included in the updating data (31D) received by the receiving procedure to the application software based on a judgement result of the judging procedure,
**characterized in that**
the third judging procedure sends, if it is judged that the software update is necessary, to the equipment management apparatus (100) an updating data acquisition request including the definition data in which the software information of the software application for updating the software of the electronic equipment is defined, and the module data forming the software application.

16. The computer-readable storage medium as claimed in claim 15, wherein the second judging procedure judges whether the software update of the application software is executable in the electronic equipment (200), based on equipment state information obtained from the electronic equipment (200).

17. The computer-readable storage medium as claimed in claim 15 or 16, wherein the application software comprises:
a part configured to confirm whether the application software itself is a software updating target, based on the software information defined in the definition data included in the updating data (31D); and
a part configured to execute the software update of the application software itself using the module data, if it is confirmed that the application software itself is the software updating target.

18. The computer-readable storage medium as claimed in anyone of claims 15 to 17, wherein the generating procedure generates the updating data (31D) by archiving application definition data (DD) of the application software (AP) that is generated based on software information of the application software (AP) acquired from a software provider apparatus (400), and by archiving module data (MD) of the application software (AP) acquired from the software provider apparatus (400).

## Patentansprüche

1. Gerätemanagementsystem, das umfasst:
eine Gerätemanagementvorrichtung (100);
mindestens ein zu managendes elektronisches Gerät (200); und
einen Datenkanal (N), der das mindestens eine elektronische Gerät (200) und die Gerätemanagementvorrichtung (100) koppelt,
wobei die Gerätemanagementvorrichtung (100) umfasst:
einen Halteteil (31), der konfiguriert ist, Aktualisierungsdaten (31 D) in einem vorgegebenen Speicherbereich zu halten, wobei die Aktualisierungsdaten (31 D) Definitionsdaten, in denen Softwareinformationen einer Software-Anwendung, die in dem elektronischen Gerät (200 läuft, definiert sind und die für das Aktualisieren der Software von mehreren elektronischen Geräten (200) geeignet sind, und Moduldaten der Anwendungs-Software enthalten;
einen ersten Beurteilungsteil (22), der konfiguriert ist, zu beurteilen, ob der Halteteil (31) die Aktualisierungsdaten enthält; und
einen Sendeteil (21), der konfiguriert ist, an jedes der mehreren elektronischen Geräte (200) eine Einstellungsanforderung für Zeitplaninformationen zu senden, die eine Beurteilung in Bezug darauf ermöglichen, ob eine Aktualisierung der Software des elektronischen Geräts (200) notwendig ist, und die Aktualisierungsdaten (31 D) aufgrund einer von dem elektronischen Gerät (100) gesendeten Aktualisierungsdatenerfassungsanforderung gemäß den Zeitplaninformationen an das elektronische Gerät (200) zu senden,
wobei das elektronische Gerät (200) umfasst:
einen Empfangsteil, der konfiguriert ist, die Zeitplaninformationen von der Gerätemanagementvorrichtung (100) und die von der Gerätemanagementvorrichtung (100) gesendeten Aktualisierungsdaten (31 D) zu empfangen;
einen zweiten Beurteilungsteil, der konfiguriert ist, zu beurteilen, ob eine Software-Aktualisierung der Anwendungs-Software in dem elektronischen Gerät (200) ausführbar ist;
einen dritten Beurteilungsteil, der konfiguriert ist, gemäß einem Zeitplan der empfangenen Zeitplaninformationen zu beurteilen, ob die Software-Aktualisierung notwendig ist; und
einen Anforderungsteil, der konfiguriert ist, die Software-Aktualisierung in Bezug auf die Anwendungs-Software anzufordern,
wobei der Sendeteil (21) der Gerätemanagementvorrichtung (100) konfiguriert ist, die Aktualisierungsdaten (31 D) aufgrund eines Beurteilungsergebnisses des ersten Beurteilungsteils (22) an das elektronische Gerät (200) zu senden;
und
der Anforderungsteil des elektronischen Geräts (200) konfiguriert ist, die in den durch den Empfangsteil empfangenen Aktualisierungsdaten (31) enthaltenen Moduldaten aufgrund eines Beurteilungsergebnisses des zweiten Beurteilungsteils an die Anwendungs-Software zu senden,
**dadurch gekennzeichnet, dass**
der dritte Beurteilungsteil konfiguriert ist, dann, wenn beurteilt wird, dass die Software-Aktualisierung notwendig ist, eine Aktualisierungsdatenerfassungsanforderung an die Gerätemanagementvorrichtung (100) zu senden, die die Definitionsdaten, in denen die Software-Informationen der Software-Anwendung zum Aktualisieren der Software des elektronischen Geräts definiert sind, und die Moduldaten, die die Software-Anwendung bilden, enthält.

2. Gerätemanagementsystem nach Anspruch 1, wobei der zweite Beurteilungsteil anhand von von dem elektronischen Gerät (200) erhaltenen Gerätezustandsinformationen beurteilt, ob die Software-Aktualisierung der Anwendungs-Software in dem elektronischen Gerät (200) ausführbar ist.

3. Gerätemanagementsystem nach Anspruch 1 oder 2, wobei die AnwendungsSoftware umfasst:
einen Teil, der konfiguriert ist, anhand der Software-Informationen, die in den Definitionsdaten definiert sind, die in den Aktualisierungsdaten (31 D) enthalten sind, zu bestätigen, ob die Anwendungs-Software ein Software-Aktualisierungsziel ist; und
einen Teil, der konfiguriert ist, die Software-Aktualisierung der AnwendungsSoftware unter Verwendung der Moduldaten auszuführen, wenn bestätigt wird, dass die Anwendungs-Software selbst das Software-Aktualisierungsziel ist.

4. Gerätemanagementsystem nach einem der Ansprüche 1 bis 3, wobei:
der dritte Beurteilungsteil konfiguriert ist, darin gemäß einem vorgegebenen Zeitplan, der eine Ausführungszeitvorgabe der Software-Aktualisierung anhand eines Aktualisierungsdatums und einer Aktualisierungszeit der Aktualisierungsdaten (31 D), die von der Gerätemanagementvorrichtung (100) erfasst werden, bestimmt, zu beurteilen, ob die Software-Aktualisierung notwendig ist, und das Senden der Aktualisierungsdaten (31 D) in Bezug auf das elektronische Gerät (200) anzufordern, wenn beurteilt wird, dass die Software-Aktualisierung in dem elektronischen Gerät (200) notwendig ist.

5. Gerätemanagementsystem nach einem der Ansprüche 1 bis 3, wobei:
der erste Beurteilungsteil (22) der Gerätemanagementvorrichtung (100) gemäß einem vorgegebenen Zeitplan, der eine Ausführungszeitvorgabe der Software-Aktualisierung bestimmt, beurteilt, ob der Halteteil (31) die Aktualisierungsdaten (31 D) enthält, und die Aktualisierungsdaten (31 D) an das elektronische Gerät (200) sendet, wenn beurteilt wird, dass der Halteteil (31) die Aktualisierungsdaten (31) enthält.

6. Gerätemanagementsystem nach einem der Ansprüche 1 bis 3, das ferner umfasst:
eine Software-Bereitstellungsvorrichtung (400), die an den vorgegebenen Datenkanal (N) gekoppelt ist und die konfiguriert ist, die Anwendungs-Software in einem vorgegebenen Speicherbereich einer Speichervorrichtung zu enthalten und die Anwendungs-Software als Reaktion auf eine Anforderung bereitzustellen; und
die Gerätemanagementvorrichtung (100) ferner einen Erzeugungsteil (22a) umfasst, der konfiguriert ist, die Aktualisierungsdaten (31 D) aus der durch die Software-Bereitstellungsvorrichtung (400) bereitgestellten Anwendungs-Software zu erzeugen und die durch den Erzeugungsteil (22a) erzeugten Aktualisierungsdaten an das elektronische Gerät (200) zu senden.

7. Gerätemanagementsystem nach Anspruch 6, wobei die Software-Bereitstellungsvorrichtung (400) der Gerätemanagementvorrichtung (100) die Ausführung der Software-Aktualisierung gemäß einem vorgegebenen Zeitplan, der eine Ausführungszeitvorgabe der Software-Aktualisierung bestimmt, meldet und die Anwendungs-Software abhängig von einer Anforderung von der Gerätemanagementvorrichtung (100), die über die Ausführung der Software-Aktualisierung unterrichtet wird, bereitstellt.

8. Gerätemanagementsystem nach Anspruch 6, wobei die Gerätemanagementvorrichtung (100) ferner einen Teil umfasst, der konfiguriert ist, gemäß einem vorgegebenen Zeitplan, der eine Ausführungszeitvorgabe der Software-Aktualisierung bestimmt, eine Anforderung in Bezug auf die Software-Bereitstellungsvorrichtung (400) zu senden, um die Anwendungs-Software bereitzustellen.

9. Gerätemanagementsystem nach Anspruch 1, wobei der Erzeugungsteil (22a) konfiguriert ist, die Aktualisierungsdaten (31 D) durch Archivieren von Anwendungsdefinitionsdaten (DD), die anhand von Software-Informationen der Anwendungs-Software (AP), die von der Software-Bereitstellungsvorrichtung (400) erfasst werden, erzeugt werden, und durch Archivieren von Moduldaten (MD) der Anwendungs-Software, die von der Software-Bereitstellungsvorrichtung (400) erfasst werden, zu erzeugen.

10. Elektronisches Gerät (200), mit dem mit einer Gerätemanagementvorrichtung (100) über einen Datenkanal (N) kommuniziert werden kann, das umfasst:
einen Empfangsteil, der konfiguriert ist, Moduldaten einer AnwendungsSoftware und Zeitplaninformationen und Aktualisierungsdaten (31 D) von einer Gerätemanagementvorrichtung (100) zu empfangen, wobei die Aktualisierungsdaten (31 D) Definitionsdaten enthalten, in denen Software-Informationen einer SoftwareAnwendung, die in dem elektronischen Gerät (20) läuft, definiert sind, wobei die Zeitplaninformationen einen Zeitplan für das Aktualisieren der AnwendungsSoftware beschreiben;
einen Beurteilungsteil, der zweiter Beurteilungsteil genannt wird, der konfiguriert ist, zu beurteilen, ob eine Software-Aktualisierung einer AnwendungsSoftware, die auf dem elektronischen Gerät (200) läuft, in dem elektronischen Gerät (200) ausführbar ist;
einen Beurteilungsteil (41), der dritter Beurteilungsteil genannt wird, der konfiguriert ist, gemäß einem Zeitplan der empfangenen Zeitplaninformationen zu beurteilen, ob die Software-Aktualisierung notwendig ist; und
einen Anforderungsteil, der konfiguriert ist, die Software-Aktualisierung in Bezug auf die Anwendungs-Software anzufordern,
wobei der Anforderungsteil konfiguriert ist, die Moduldaten, die in den Aktualisierungsdaten (31 D) enthalten sind, die durch den Empfangsteil empfangen werden, aufgrund eines Beurteilungsergebnisses des Beurteilungsteils an die Anwendungs-Software zu senden,
**dadurch gekennzeichnet, dass**
der dritte Beurteilungsteil konfiguriert ist, dann, wenn beurteilt wird, dass die Software-Aktualisierung notwendig ist, eine Aktualisierungsdatenerfassungsanforderung, die die Definitionsdaten enthält, in denen die Software-Informationen der Software-Anwendung für das Aktualisieren der Software des elektronischen Geräts definiert sind, und die Moduldaten, die die Software-Anwendung bilden, an die Gerätemanagementvorrichtung (100) zu senden.

11. Elektronisches Gerät (200) nach Anspruch 10, wobei der zweite Beurteilungsteil aufgrund von Gerätezustandsinformationen, die von dem elektronischen Gerät (200) erhalten werden, beurteilt, ob die Software-Aktualisierung der Anwendungs-Software in dem elektronischen Gerät (200) ausführbar ist.

12. Elektronisches Gerät (200) nach Anspruch 10 oder 11, wobei die Anwendungs-Software umfasst:
einen Teil, der konfiguriert ist, anhand der Software-Informationen, die in den Definitionsdaten definiert sind, die in den Aktualisierungsdaten enthalten sind, zu bestätigen, ob die Anwendungs-Software ein Software-Aktualisierungsziel ist; und
einen Teil, der konfiguriert ist, die Software-Aktualisierung der Anwendungs-Software selbst unter Verwendung der Moduldaten (31 D) auszuführen, wenn bestätigt wird, dass die Anwendungs-Software selbst das Software-Aktualisierungsziel ist.

13. Elektronisches Gerät (200) nach einem der Ansprüche 10 bis 12, das ferner umfasst:
einen dritten Beurteilungsteil, der konfiguriert ist, darin gemäß einem vorgegebenen Zeitplan, der eine Ausführungszeitvorgabe der Software-Aktualisierung anhand eines Aktualisierungsdatums und einer Aktualisierungszeit der Aktualisierungsdaten (31 D), die von der Gerätemanagementvorrichtung (100) erfasst werden, bestimmt, zu beurteilen, ob die Software-Aktualisierung notwendig ist, und das Senden der Aktualisierungsdaten (31 D) in Bezug auf das elektronische Gerät (200) anzufordern, wenn beurteilt wird, dass die Software-Aktualisierung in dem elektronischen Gerät (200) notwendig ist.

14. Elektronisches Gerät (200) nach einem der Ansprüche 10 bis 13, wobei der Erzeugungsteil (22a) konfiguriert ist, die Aktualisierungsdaten (31 D) durch Archivieren von Anwendungsdefinitionsdaten (DD), die anhand von Software-Informationen der Anwendungs-Software (AP) erzeugt werden, die von der Software-Bereitstellungsvorrichtung (400) erfasst werden, und durch Archivieren von Moduldaten (MD) der Anwendungs-Software (AP), die von der Software-Bereitstellungsvorrichtung (400) erfasst werden, zu erzeugen.

15. Computerlesbares Speichermedium, das ein Programm speichert, dass dann, wenn es durch einen Computer eines elektronischen Geräts (200) ausgeführt wird, bewirkt, dass der Computer einen Prozess ausführt, der umfasst:
einen Erzeugungsvorgang, um Aktualisierungsdaten (31 D) aus Anwendungs-Software zu erzeugen;
einen Sendevorgang, um die Aktualisierungsdaten (31 D) von einer Gerätemanagementvorrichtung (100) an das elektronische Gerät (200) zu senden;
einen Empfangsvorgang, um Moduldaten der Anwendungs-Software, Zeitplaninformationen und Aktualisierungsdaten (31) von einer Gerätemanagementvorrichtung (100) zu empfangen, wobei die Aktualisierungsdaten (31 D) Definitionsdaten enthalten, in denen Software-Informationen von Anwendungs-Software, die in dem elektronischen Gerät (200) läuft, definiert sind, wobei die Zeitplaninformationen einen Zeitplan für das Aktualisieren der Anwendungs-Software beschreiben;
einen Beurteilungsvorgang, der zweiter Beurteilungsvorgang genannt wird, um zu beurteilen, ob eine Software-Aktualisierung einer Anwendungs-Software, die auf dem elektronischen Gerät (200) läuft, in dem elektronischen Gerät (200) ausführbar ist;
einen Beurteilungsvorgang, der durch einen Beurteilungsteil des elektronischen Geräts (200) auszuführen ist, der dritter Beurteilungsvorgang genannt wird, um gemäß der empfangen Zeitplaninformationen zu beurteilen, ob die Software-Aktualisierung notwendig ist; und
einen Anforderungsvorgang, um die Software-Aktualisierung in Bezug auf die Anwendungs-Software anzufordern,
wobei der Anforderungsvorgang die Moduldaten, die in den Aktualisierungsdaten (31 D) enthalten sind, die durch den Empfangsvorgang empfangen werden, aufgrund eines Beurteilungsergebnisses des Beurteilungsvorgangs an die Anwendungs-Software sendet,
**dadurch gekennzeichnet, dass**
der dritte Beurteilungsvorgang dann, wenn beurteilt wird, dass die Software-Aktualisierung notwendig ist, eine Aktualisierungsdatenerfassungsanforderung, die die Definitionsdaten, in denen die Software-Informationen der Software-Anwendung für das Aktualisieren der Software des elektronischen Geräts definiert sind, und die Moduldaten, die die Software-Anwendung bilden, enthält, an die Gerätemanagementvorrichtung (100) sendet.

16. Computerlesbares Speichermedium nach Anspruch 15, wobei der zweite Beurteilungsvorgang aufgrund von Gerätezustandsinformationen, die von dem elektronischen Gerät (200) erhalten werden, beurteilt, ob die Software-Aktualisierung der Anwendungs-Software in dem elektronischen Gerät (200) ausführbar ist.

17. Computerlesbares Speichermedium nach Anspruch 15 oder 16, wobei die Anwendungs-Software umfasst:
einen Teil, der konfiguriert ist, anhand der Software-Informationen, die in den Definitionsdaten definiert sind, die in den Aktualisierungsdaten (31 D) enthalten sind, zu bestätigen, ob die Anwendungs-Software selbst ein Software-Aktualisierungsziel ist; und
einen Teil, der konfiguriert ist, die Software-Aktualisierung der Anwendungs-Software selbst unter Verwendung der Moduldaten auszuführen, wenn bestätigt wird, dass die Anwendungs-Software selbst das Software-Aktualisierungsziel ist.

18. Computerlesbares Speichermedium nach einem der Ansprüche 15 bis 17, wobei der Erzeugungsvorgang die Aktualisierungsdaten (31 D) durch Archivieren von Anwendungsdefinitionsdaten (DD) der Anwendungs-Software (AP), die anhand von Software-Informationen der Anwendungs-Software (AP) erzeugt werden, die von einer Software-Bereitstellungsvorrichtung (400) erfasst werden, und durch Archivieren von Moduldaten (MD) der Anwendungs-Software (AP), die von der Software-Bereitstellungsvorrichtung (400) erfasst werden, erzeugt.

## Revendications

1. Système de gestion d'équipement, comprenant :
un appareil de gestion d'équipement (100) ;
au moins un équipement électronique (200) devant être géré ; et
un canal de données (N) couplant ledit au moins un équipement électronique (200) et l'appareil de gestion d'équipement (100) ;
l'appareil de gestion d'équipement (100) comprenant :
une partie de maintien (31) configurée de manière à maintenir des données de mise à jour (31D) dans une zone de stockage prédéterminée, les données de mise à jour (31D) incluant des données de définition dans lesquelles des informations logicielles d'une application logicielle qui fonctionne dans l'équipement électronique (200) sont définies et lesquelles sont pertinentes en vue d'une mise à jour du logiciel d'une pluralité d'équipements électroniques (200), et des données de module du logiciel d'application ;
une première partie de détermination (22) configurée de manière à déterminer si la partie de maintien (31) maintient les données de mise à jour ; et
une partie d'envoi (21) configurée de manière à envoyer, à chaque dispositif de la pluralité d'équipements électroniques (200), une demande de définition pour des informations de planification permettant de déterminer si une mise à jour du logiciel de l'équipement électronique (200) est nécessaire, et à envoyer les données de mise à jour (31D) à l'équipement électronique (200) sur la base d'une demande d'acquisition de données de mise à jour envoyée à partir de l'équipement électronique (200) selon les informations de planification ;
l'équipement électronique (200) comprenant :
une partie de réception configurée de manière à recevoir les informations de planification en provenance de l'appareil de gestion d'équipement (100) et les données de mise à jour (31D) envoyées à partir de l'appareil de gestion d'équipement (100) ;
une deuxième partie de détermination configurée de manière à déterminer si une mise à jour logicielle du logiciel d'application est exécutable dans l'équipement électronique (200) ;
une troisième partie de détermination configurée de manière à déterminer si la mise à jour logicielle est nécessaire selon une planification des informations de planification reçues ; et
une partie de demande configurée de manière à demander la mise à jour logicielle relativement au logiciel d'application ;
dans lequel la partie d'envoi (21) de l'appareil de gestion d'équipement (100) est configurée de manière à envoyer les données de mise à jour (31D) à l'équipement électronique (200) sur la base d'un résultat de détermination de la première partie de détermination (22) ; et
la partie de demande de l'équipement électronique (200) est configurée de manière à envoyer les données de module incluses dans les données de mise à jour (31D) reçues par la partie de réception, au logiciel d'application, sur la base d'un résultat de détermination de la deuxième partie de détermination ;
**caractérisé en ce que** :
la troisième partie de détermination est configurée de manière à envoyer, s'il est déterminé que la mise à jour logicielle est nécessaire, à l'appareil de gestion d'équipement (100), une demande d'acquisition de données de mise à jour incluant les données de définition dans lesquelles les informations logicielles de l'application logicielle pour mettre à jour le logiciel de l'équipement électronique sont définies, et les données de module formant l'application logicielle.

2. Système de gestion d'équipement selon la revendication 1, dans lequel la deuxième partie de détermination détermine si la mise à jour logicielle du logiciel d'application est exécutable dans l'équipement électronique (200), sur la base d'informations d'état d'équipement obtenues à partir de l'équipement électronique (200).

3. Système de gestion d'équipement selon la revendication 1 ou 2, dans lequel le logiciel d'application comprend :
une partie configurée de manière à confirmer si le logiciel d'application est une cible de mise à jour de logiciel, sur la base des informations logicielles définies dans les données de définition incluses dans les données de mise à jour (31D) ; et
une partie configurée de manière à exécuter la mise à jour logicielle du logiciel d'application, en utilisant les données de module, s'il est confirmé que le logiciel d'application lui-même est la cible de mise à jour de logiciel.

4. Système de gestion d'équipement selon l'une quelconque des revendications 1 à 3, dans lequel :
la troisième partie de détermination est configurée de manière à déterminer si la mise à jour logicielle est nécessaire dans celle-ci selon une planification prédéterminée qui détermine une temporisation d'exécution de la mise à jour logicielle, sur la base d'une heure et d'une date de mise à jour des données de mise à jour (31D) acquises à partir de l'appareil de gestion d'équipement (100), et à demander l'envoi des données de mise à jour (31D) relativement à l'équipement électronique (200) s'il est déterminé que la mise à jour logicielle est nécessaire dans l'équipement électronique (200).

5. Système de gestion d'équipement selon l'une quelconque des revendications 1 à 3, dans lequel :
la première partie de détermination (22) de l'appareil de gestion d'équipement (100) détermine si la partie de maintien (31) maintient les données de mise à jour (31D), selon une planification prédéterminée qui détermine une temporisation d'exécution de la mise à jour logicielle, et envoie les données de mise à jour (31D) à l'équipement électronique (200) lorsqu'il est déterminé que la partie de maintien (31) maintient les données de mise à jour (31D).

6. Système de gestion d'équipement selon l'une quelconque des revendications 1 à 3, comprenant en outre :
un appareil de fourniture de logiciels (400), couplé au canal de données prédéterminé (N), configuré de manière à maintenir le logiciel d'application dans une zone de stockage prédéterminée d'un dispositif de stockage, et à fournir le logiciel d'application en réponse à une demande ; et
dans lequel l'appareil de gestion d'équipement (100) comprend en outre une partie de génération (22a) configurée de manière à générer les données de mise à jour (31D) à partir du logiciel d'application fourni par l'appareil de fourniture de logiciels (400), et il envoie les données de mise à jour générées par la partie de génération (22a) à l'équipement électronique (200).

7. Système de gestion d'équipement selon la revendication 6, dans lequel l'appareil de fourniture de logiciels (400) notifie, à l'appareil de gestion d'équipement (100), l'exécution de la mise à jour logicielle, selon une planification prédéterminée qui détermine une temporisation d'exécution de la mise à jour logicielle, et il fournit le logiciel d'application en fonction d'une demande en provenance de l'appareil de gestion d'équipement (100) qui est notifié de l'exécution de la mise à jour logicielle.

8. Système de gestion d'équipement selon la revendication 6, dans lequel l'appareil de gestion d'équipement (100) comprend en outre une partie configurée de manière à envoyer une demande relativement à l'appareil de fourniture de logiciels (400) pour fournir le logiciel d'application, selon une planification prédéterminée qui détermine une temporisation d'exécution de la mise à jour logicielle.

9. Système de gestion d'équipement selon la revendication 1, dans lequel la partie de génération (22a) est configurée de manière à générer les données de mise à jour (31D) en archivant des données de définition d'application (DD) qui sont générées sur la base d'informations logicielles du logiciel d'application (AP) acquis auprès de l'appareil de fourniture de logiciels (400), et en archivant des données de module (MD) du logiciel d'application qui est acquis auprès de l'appareil de fourniture de logiciels (400).

10. Équipement électronique (200) pouvant communiquer avec un appareil de gestion d'équipement (100) par l'intermédiaire d'un canal de données (N), comprenant :
une partie de réception configurée de manière à recevoir des données de module d'un logiciel d'application, et des informations de planification ainsi que des données de mise à jour (31D) en provenance d'un appareil de gestion d'équipement (100), les données de mise à jour (31D) incluant des données de définition dans lesquelles des informations logicielles d'une application logicielle qui fonctionne dans l'équipement électronique (200) sont définies, les informations de planification décrivant une planification pour mettre à jour le logiciel d'application ;
une partie de détermination, appelée « deuxième partie de détermination », configurée de manière à déterminer si une mise à jour logicielle d'un logiciel d'application qui est exécuté sur l'équipement électronique (200) est exécutable dans l'équipement électronique (200) ;
une partie de détermination (41), appelée « troisième partie de détermination », configurée de manière à déterminer si la mise à jour logicielle est nécessaire selon une planification des informations de planification reçues ; et
une partie de demande configurée de manière à demander la mise à jour logicielle relativement au logiciel d'application ;
dans lequel la partie de demande est configurée de manière à envoyer les données de module incluses dans les données de mise à jour (31D) reçues par la partie de réception, au logiciel d'application, sur la base d'un résultat de détermination de la partie de détermination ;
**caractérisé en ce que** :
la troisième partie de détermination est configurée de manière à envoyer, s'il est déterminé que la mise à jour logicielle est nécessaire, à l'appareil de gestion d'équipement (100), une demande d'acquisition de données de mise à jour incluant les données de définition dans lesquelles les informations logicielles de l'application logicielle pour mettre à jour le logiciel de l'équipement électronique sont définies, et les données de module formant l'application logicielle.

11. Équipement électronique (200) selon la revendication 10, dans lequel la deuxième partie de détermination détermine si la mise à jour logicielle du logiciel d'application est exécutable dans l'équipement électronique (200), sur la base d'informations d'état d'équipement obtenues à partir de l'équipement électronique (200).

12. Équipement électronique (200) selon la revendication 10 ou 11, dans lequel le logiciel d'application comprend :
une partie configurée de manière à confirmer si le logiciel d'application est une cible de mise à jour de logiciel, sur la base des informations logicielles définies dans les données de définition incluses dans les données de mise à jour ; et
une partie configurée de manière à exécuter la mise à jour logicielle du logiciel d'application lui-même en utilisant les données de module (31D), s'il est confirmé que le logiciel d'application lui-même est la cible de mise à jour de logiciel.

13. Équipement électronique (200) selon l'une quelconque des revendications 10 à 12, comprenant en outre :
une troisième partie de détermination configurée de manière à déterminer si la mise à jour logicielle est nécessaire dans celle-ci selon une planification prédéterminée qui détermine une temporisation d'exécution de la mise à jour logicielle, sur la base d'une heure et d'une date de mise à jour des données de mise à jour (31D) acquises auprès de l'appareil de gestion d'équipement (100), et à demander l'envoi des données de mise à jour (31D) relativement à l'équipement électronique (200) s'il est déterminé que la mise à jour logicielle est nécessaire dans l'équipement électronique (200).

14. Équipement électronique (200) selon l'une quelconque des revendications 10 à 13, dans lequel la partie de génération (22a) est configurée de manière à générer les données de mise à jour (31D) en archivant des données de définition d'application (DD) qui sont générées sur la base d'informations logicielles du logiciel d'application (AP) acquis auprès de l'appareil de fourniture de logiciels (400), et en archivant des données de module (MD) du logiciel d'application (AP) qui est acquis auprès de l'appareil de fourniture de logiciels (400).

15. Support de stockage lisible par ordinateur lequel stocke un programme qui, lorsqu'il est exécuté par un ordinateur d'un équipement électronique (200), amène l'ordinateur à mettre en oeuvre un procédé comprenant :
une procédure de génération consistant à générer des données de mise à jour (31D) à partir d'un logiciel d'application ;
une procédure d'envoi consistant à envoyer les données de mise à jour (31D), d'un appareil de gestion d'équipement (100) à l'équipement électronique (200) ;
une procédure de réception consistant à recevoir des données de module du logiciel d'application, des informations de planification et des données de mise à jour (31D) en provenance d'un appareil de gestion d'équipement (100), les données de mise à jour (31D) incluant des données de définition dans lesquelles des informations logicielles d'un logiciel d'application qui fonctionne dans l'équipement électronique (200) sont définies, les informations de planification décrivant une planification pour mettre à jour le logiciel d'application ;
une procédure de détermination, appelée « deuxième procédure de détermination », consistant à déterminer si une mise à jour logicielle du logiciel d'application qui est exécuté sur l'équipement électronique (200) est exécutable dans l'équipement électronique (200) ;
une procédure de détermination devant être mise en oeuvre par une partie de détermination de l'équipement électronique (200), appelée « troisième procédure de détermination », consistant à déterminer si la mise à jour logicielle est nécessaire selon les informations de planification reçues ; et
une procédure de demande consistant à demander la mise à jour logicielle relativement au logiciel d'application ;
dans lequel la procédure de demande envoie les données de module incluses dans les données de mise à jour (31D) reçues par la procédure de réception, au logiciel d'application, sur la base d'un résultat de détermination de la procédure de détermination ;
**caractérisé en ce que** :
la troisième procédure de détermination envoie, s'il est déterminé que la mise à jour logicielle est nécessaire, à l'appareil de gestion d'équipement (100), une demande d'acquisition de données de mise à jour incluant les données de définition dans lesquelles les informations logicielles de l'application logicielle pour mettre à jour le logiciel de l'équipement électronique sont définies, et les données de module formant l'application logicielle.

16. Support de stockage lisible par ordinateur selon la revendication 15, dans lequel la deuxième procédure de détermination détermine si la mise à jour logicielle du logiciel d'application est exécutable dans l'équipement électronique (200), sur la base d'informations d'état d'équipement obtenues à partir de l'équipement électronique (200).

17. Support de stockage lisible par ordinateur selon la revendication 15 ou 16, dans lequel le logiciel d'application comprend :
une partie configurée de manière à confirmer si le logiciel d'application lui-même est une cible de mise à jour de logiciel, sur la base des informations logicielles définies dans les données de définition incluses dans les données de mise à jour (31D) ; et
une partie configurée de manière à exécuter la mise à jour logicielle du logiciel d'application lui-même en utilisant les données de module, s'il est confirmé que le logiciel d'application lui-même est la cible de mise à jour de logiciel.

18. Support de stockage lisible par ordinateur selon l'une quelconque des revendications 15 à 17, dans lequel la procédure de génération génère les données de mise à jour (31D) en archivant des données de définition d'application (DD) du logiciel d'application (AP) qui sont générées sur la base d'informations logicielles du logiciel d'application (AP) acquis auprès de l'appareil de fourniture de logiciels (400), et en archivant des données de module (MD) du logiciel d'application (AP) acquis auprès de l'appareil de fourniture de logiciels (400).
